(19) Europäisches Patentamt
European Patent Office
Office européen des brevets

(11) EP 4 742 182 A1

(12) **EUROPEAN PATENT APPLICATION**
published in accordance with Art. 153(4) EPC

(43) Date of publication:
13.05.2026  Bulletin 2026/20

(51) International Patent Classification (IPC):
*G06V 10/774* (2022.01)   *G06N 3/096* (2023.01)

(21) Application number: 24842081.2

(22) Date of filing: 03.06.2024

(52) Cooperative Patent Classification (CPC):
G06V 10/774; G06F 18/00; G06V 10/776;
G06V 10/82; H04N 23/73

(86) International application number:
PCT/CN2024/096944

(87) International publication number:
WO 2025/016081 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.07.2023 CN 202310894889

(71) Applicant: Tencent Technology (Shenzhen)
Company Limited
Shenzhen, Guangdong 518057 (CN)

(72) Inventor: ZHANG, Zhenhong
Shenzhen, Guangdong 518057 (CN)

(74) Representative: Reddie & Grose LLP
The White Chapel Building
10 Whitechapel High Street
London E1 8QS (GB)

(54) **DATA PROCESSING METHOD AND RELATED APPARATUS, AND DEVICE AND STORAGE MEDIUM**

(57)     Disclosed in the present application are a data processing method and related apparatus, and a device and a storage medium. The method comprises: sending to a server K images which are captured in the current site environment, and the server acquiring K first prediction results by means of an image recognition model; constructing a fine-tuning training set according to the K images and the K first prediction results; by means of a model to be trained, acquiring a second prediction result of each image in the fine-tuning training set; according to the second prediction result of each image and a first prediction result of the image in the fine-tuning training set, updating model parameters of the model to be trained, so as to obtain a local recognition model and model tuning parameters; and if a model fine-tuning condition is met, sending the model tuning parameters to the server, and the server updating model parameters of the image recognition model according to a set of model tuning parameters. Thus, the present application enables an image recognition model to be applicable to various site environments, improves the precision of model recognition, and also saves on processing resources of a server and improves the efficiency of model learning.

Photograph K images in a current on-site environment by using an image capture apparatus, K being an integer greater than or equal to 1 — S210

Transmit the K images to a server, so that the server obtains K first prediction results based on the K images by using an image recognition model — S220

Construct a fine-tuning training set according to the K images and the K first prediction results transmitted by the server, the fine-tuning training set including K groups of fine-tuning training data, and each group of fine-tuning training data including an image and a first prediction result of the image — S230

Fine-tune a to-be-trained model on an on-site terminal by using the fine-tuning training set, and in a process of fine-tuning the to-be-trained model on the on-site terminal, obtain, based on an image included in each group of fine-tuning training data in the fine-tuning training set and by using the to-be-trained model, K second prediction results corresponding to the images — S240

Update a model parameter of the to-be-trained model according to the second prediction result corresponding to each image and the first prediction result of the image in the fine-tuning training set, to obtain a local recognition model and a model adjustment parameter corresponding to the local recognition model — S250

Transmit the model adjustment parameter to a server if the local recognition model satisfies a model fine-tuning condition, so that the server updates a model parameter of an image recognition model according to a model adjustment parameter set from at least one terminal, the model adjustment parameter set including the model adjustment parameter — S260

FIG. 3

Processed by Luminess, 75001 PARIS (FR)

**Description**

RELATED APPLICATION

This application claims priority to Chinese Patent Application No. 202310894889.1, filed with the China National Intellectual Property Administration on July 20, 2023 and entitled "DATA PROCESSING METHOD AND RELATED APPARATUS, AND DEVICE AND STORAGE MEDIUM ", which is incorporated herein by reference in its entirety.

FIELD OF THE TECHNOLOGY

This application relates to the field of artificial intelligence technologies, and in particular, to a data processing method, a related apparatus, a device, and a storage medium.

BACKGROUND OF THE DISCLOSURE

In recent years, artificial intelligence (AI) technologies are constantly developed, and are widely applied to the image recognition field. AI can recognize a biometric object (for example, a human face, an iris, or a palmprint), an item, a text, and the like in an image by using complex algorithms and models, thereby implementing intelligent image processing and analysis.

Image capturing in different environments is usually susceptible to complex environmental factors, for example, light intensity and background noise of different environments are different. These environmental factors may affect the accuracy of image recognition. Therefore, in the related technology, a large quantity of images may be captured in different environments to perform model training, to enhance model recognition capability.

However, in the related technology, on one hand, because images used for model training can hardly cover various environments, sample types that can be learned by models are limited, resulting in a poor model learning effect. On the other hand, training a large quantity of images by models not only consumes much computing power, but also consumes much time. No effective solution to the foregoing problem has been provided yet.

SUMMARY

Embodiments of this application provide a data processing method, a related apparatus, a device, and a storage medium, so that an image recognition model is applicable to various specific on-site environments to improve model recognition precision, and processing resources of a server are saved and model learning efficiency is improved.

In view of this, according to one aspect of this application, a data processing method is provided, performed by an on-site terminal, including:

photographing K images in a current on-site environment by using an image capturing apparatus, K being an integer greater than or equal to 1;

transmitting the K images to a server, so that the server obtains K first prediction results based on the K images by using an image recognition model;

constructing a fine-tuning training set according to the K images and the K first prediction results transmitted by the server, the fine-tuning training set including K groups of fine-tuning training data, and each group of fine-tuning training data including an image and a first prediction result of the image;

fine-tuning a to-be-trained model on the on-site terminal by using the fine-tuning training set, and in a process of fine-tuning the to-be-trained model on the on-site terminal, obtaining, based on an image included in each group of fine-tuning training data in the fine-tuning training set and by using the to-be-trained model, a second prediction result corresponding to each image, and updating a model parameter of the to-be-trained model according to the second prediction result corresponding to each image and the first prediction result of the image in the fine-tuning training set, to obtain a local recognition model and a model adjustment parameter corresponding to the local recognition model; and

sending the model adjustment parameter to the server if the local recognition model satisfies a model fine-tuning condition, so that the server updates a model parameter of an image recognition model according to a model adjustment parameter set from at least one terminal, the model adjustment parameter set including the model adjustment parameter.

According to another aspect of this application, a data processing method is provided, performed by a server, including:

receiving K images transmitted by an on-site terminal, the K images being photographed by the on-site terminal in a current on-site environment by using a capture apparatus, and K being an integer greater than or equal to 1;

obtaining K first prediction results based on the K images by using an image recognition model;

transmitting the K first prediction results to the on-site terminal, so that the on-site terminal constructs a fine-tuning training set according to the K images and the K first prediction results, fine-tunes a to-be-trained model on the on-site terminal by using the fine-tuning training set, and in a process of fine-tuning the to-be-trained model on the on-site terminal, obtains, based on an image included in each group of fine-tuning training data in the fine-tuning training set and by using the to-be-trained model, a second prediction result corresponding to each image, and updates a model parameter of the to-be-trained model according to the second prediction result corresponding to each image and the first prediction result of the image in the fine-tuning training set, to obtain a local recognition model and a model adjustment parameter corresponding to the local recognition model, the fine-tuning training set including K groups of fine-tuning training data, and each group of fine-tuning training data including an image and the first prediction result of the image;

receiving, if the local recognition model satisfies a model fine-tuning condition, the model adjustment parameter transmitted by the on-site terminal; and

updating a model parameter of the image recognition model when obtaining a model adjustment parameter set from at least one terminal, the model adjustment parameter set including the model adjustment parameter.

According to another aspect of this application, a data processing apparatus is provided, deployed on an on-site terminal and including:

a photographing module, configured to photograph K images in a current on-site environment by using an image capturing apparatus, K being an integer greater than or equal to 1;

a transmission module, configured to transmit the K images to a server, so that the server obtains K first prediction results based on the K images by using an image recognition model;

an obtaining module, configured to construct a fine-tuning training set according to the K images and the K first prediction results transmitted by the server, the fine-tuning training set including K groups of fine-tuning training data, and each group of fine-tuning training data including an image and a first prediction result of the image; and

an updating module, configured to fine-tune a to-be-trained model on the on-site terminal by using the fine-tuning training set, and in a process of fine-tuning the to-be-trained model on the on-site terminal, obtain, based on an image included in each group of fine-tuning training data in the fine-tuning training set and by using the to-be-trained model, a second prediction result corresponding to each image, and update a model parameter of the to-be-trained model according to the second prediction result corresponding to each image and the first prediction result of the image in the fine-tuning training set, to obtain a local recognition model and a model adjustment parameter corresponding to the local recognition model;

the transmission module being further configured to transmit the model adjustment parameter to the server if the local recognition model satisfies a model fine-tuning condition, so that the server updates a model parameter of the image recognition model according to a model adjustment parameter set from at least one terminal, the model adjustment parameter set including the model adjustment parameter.

According to another aspect of this application, a data processing apparatus is provided, deployed on a server and including:

a receiving module, configured to receive K images transmitted by an on-site terminal, the K images being photographed by the on-site terminal in a current on-site environment by using a capture apparatus, and K being an integer greater than or equal to 1;

an obtaining module, configured to obtain K first prediction results based on the K images by using an image recognition model;

a transmission module, configured to transmit the K first prediction results to the on-site terminal, so that the on-site terminal constructs a fine-tuning training set according to the K images and the K first prediction results, fine-tunes a to-be-trained model on the on-site terminal by using the fine-tuning training set, and in a process of fine-tuning the to-be-trained model on the on-site terminal, obtains, based on an image included in each group of fine-tuning training data in the fine-tuning training set and by using the to-be-trained model, a second prediction result corresponding to each image, and updates a model parameter of the to-be-trained model according to the second prediction result corresponding to each image and the first prediction result of the image in the fine-tuning training set, to obtain a local recognition model and a model adjustment parameter corresponding to the local recognition model, the fine-tuning training set including K groups of fine-tuning training data, and each group of fine-tuning training data including an image and the first prediction result of the image;

the receiving module being further configured to receive, if the local recognition model satisfies a model fine-tuning condition, the model adjustment parameter transmitted by the on-site terminal; and

an updating module, configured to update a model parameter of the image recognition model when obtaining a model adjustment parameter set from at least one terminal, the model adjustment parameter set including the model adjustment parameter.

Another aspect of this application provides a computer device, including a memory and a processor, the memory having a computer program stored therein, and the processor, when executing the computer program, performing the methods according to the foregoing aspects.

According to another aspect of this application, a computer-readable storage medium is provided, having a computer program stored therein, and the computer program is executed by a processor to perform the methods according to the foregoing aspects.

According to another aspect of this application, a computer program product is provided, including a computer program, the computer program being executed by a processor to perform the methods according to the foregoing aspects.

It may be learned from the foregoing technical solutions that the embodiments of this application have the following advantages:

In the embodiments of this application, a data processing method is provided. First, the on-site terminal photographs the K images in the current on-site environment by using the image capturing apparatus. The on-site environment may affect accuracy of image recognition; therefore, model fine-tuning needs to be performed. To implement fine-tuning, the K images are sent to the server, and the server obtains the K first prediction results based on the K images by using the image recognition model, and then uses the first prediction results as annotation information of corresponding images. Then, the on-site terminal may construct the fine-tuning training set according to the K images and the K first prediction results transmitted by the server, fine-tune the to-be-trained model on the on-site terminal by using the fine-tuning training set, and in the process of fine-tuning the to-be-trained model on the on-site terminal, obtain, based on the image included in each group of fine-tuning training data in the fine-tuning training set and by using the to-be-trained model, the second prediction result corresponding to each image, and then use the second prediction result as prediction information. Next, the on-site terminal updates the model parameter of the to-be-trained model according to the second prediction result corresponding to each image and the first prediction result of the image in the fine-tuning training set, to obtain the local recognition model and the model adjustment parameter corresponding to the local recognition model. The on-site terminal sends the model adjustment parameter to the server if the local recognition model satisfies the model fine-tuning condition, so that the server updates the model parameter of the image recognition model according to a model adjustment parameter set from at least one terminal. In the foregoing manner, the terminal may fine-tune the local model based on the images captured in the on-site environment, and report a fine-tuned target parameter to the server. The server updates the image recognition model according to the parameter set reported by terminals. Therefore, the image recognition model is applicable to various specific on-site environments to improve model recognition precision, and processing resources of the server are saved and model learning efficiency is improved.

BRIEF DESCRIPTION OF THE DRAWINGS

FIG. 1 is a schematic diagram of an implementation environment of a data processing method according to an embodiment of this application;

FIG. 2 is a schematic diagram of an implementation environment of an image recognition method according to an embodiment of this application;

FIG. 3 is a schematic flowchart of a data processing method according to an embodiment of this application;

FIG. 4 is a schematic interactive flowchart of voting based on a synchronous voting mechanism according to an embodiment of this application;

FIG. 5 is another schematic interactive flowchart of voting based on a synchronous voting mechanism according to an embodiment of this application;

FIG. 6 is a schematic diagram of establishing an association between terminals according to an embodiment of this application;

FIG. 7 is another schematic diagram of establishing an association between terminals according to an embodiment of this application;

FIG. 8 is still another schematic diagram of establishing an association between terminals according to an embodiment of this application;

FIG. 9 is a schematic diagram of an overall procedure of a data processing method according to an embodiment of this application;

FIG. 10 is a schematic flowchart of a data processing method according to an embodiment of this application;

FIG. 11 is a schematic diagram of a framework for data processing between a terminal and a server according to an embodiment of this application;

FIG. 12 is a schematic diagram of a data processing apparatus according to an embodiment of this application;

FIG. 13 is another schematic diagram of a data processing apparatus according to an embodiment of this application; and

FIG. 14 is a schematic structural diagram of a computer device according to an embodiment of this application.

DESCRIPTION OF EMBODIMENTS

Embodiments of this application provide a data processing method, a related apparatus, a device, and a storage medium, so that an image recognition model is applicable to various specific on-site environments to improve model recognition precision, and processing resources of a server are saved and model learning efficiency is improved.
The terms such as "first", "second", "third", and "fourth" (if any) in the specification and claims of this application and in the accompanying drawings are used for distinguishing similar objects and not necessarily used for describing any particular order or sequence. Data used in this way is exchangeable in a proper case, so that the embodiments of this application described herein can be implemented in an order different from the order shown or described herein. In addition, the terms "include", "corresponding to", and any other variants are intended to cover non-exclusive inclusion. For example, a process, a method, a system, a product, or a device that includes a series of operations or units is not necessarily limited to those expressly listed operations or units, but may include other operations or units not expressly listed or inherent to such a process, method, product, or device.
Image capturing is usually susceptible to complex environmental factors, and these environmental factors may affect the accuracy of image recognition. Therefore, to improve the accuracy of image recognition, massive training data and a model with massive parameters may be used for training. The massive training data enables the model to have sufficient teaching materials for learning, and the massive parameters enable the model to learn better and learn knowledge in the teaching materials more easily. However, it is usually difficult for training data to cover various real environments, and massive training data and parameters increase model training difficulty.
Based on this, in the embodiments of this application, a data processing method is provided, to implement model fine-tuning according to images captured on site in real time, fine-tuning result synchronization, and background model optimization, thereby improving image recognition effect and stability. The data processing method in this application is applied to at least one of the following scenarios.

1. Biometric recognition scenario.

In a biometric technology, a computer is closely integrated with optics, acoustics, biosensors, biostatistics principles, and the like to verify an identity based on inherent physiological characteristics of a human body (for example, a palmprint, a human face, or an iris). Because effects of images captured in different environments are greatly different, recognition accuracy of a biometric recognition model still faces many challenges. An example of palmprint recognition is used for description below.

Considering complexity of on-site environments, light, background noise, and the like are different. For example, light in a laboratory is relatively dark, and light in an outdoor environment is relatively bright. If each palm scanning terminal recognizes a captured image by using a local recognition model with the same model parameter, recognition results may be greatly different. Therefore, in this application, a palm scanning terminal trains a local recognition model by using a local fine-tuning policy. That is, palm scanning terminals in different on-site environments may respectively use corresponding model optimization policies. Therefore, palmprint scanning recognition effect and stability can be improved. At the same time, the palm scanning terminal further needs to feed back a fine-tuned model adjustment parameter to a server end. The server end maintains an image recognition model. Based on this, the server optimizes the image recognition model based on the model adjustment parameter reported by each palm scanning terminal, thereby improving recognition capability of the image recognition model.

Compared with the local recognition model of the palm scanning terminal, the image recognition model of the server end has more model parameters and a more complex model structure. Therefore, the image recognition model has stronger computing power and higher recognition precision. If a palm scanning terminal cannot recognize, by using a local recognition model, a palm image captured on site, the palm scanning terminal may send the palm image to the server, and the server invokes the image recognition model to recognize the palm image and feeds back a recognition result to the palm scanning terminal, to execute a corresponding service.

2. Autonomous driving scenario.

In autonomous driving, image recognition is crucial. Image recognition refers to a process of extracting features from an image and performing classification, recognition, and determining by using a computer technology. During autonomous driving, image recognition is mainly responsible for recognizing various objects around an autonomous driving vehicle, for example, a pedestrian, a road sign, and a traffic light, so as to assist the vehicle in making a corresponding decision.

Considering complexity of driving environments, driving environments in different weathers, driving road segments, times, and the like are different. For example, light on a rainy day is relatively weak, but light on a sunny day is relatively strong. For example, light is relatively strong during travel on an overpass, but light is relatively weak during travel in a tunnel. For another example, light at noon is relatively strong, but light in the evening is relatively weak. If each in-vehicle terminal recognizes a captured image by using a local recognition model with the same model parameter, recognition results may be greatly different. Therefore, in this application, an in-vehicle terminal trains a local recognition model by using a local fine-tuning policy. That is, in-vehicle terminals in different on-site environments may respectively use corresponding model optimization policies. Therefore, object recognition effect and stability can be improved. At the same time, the in-vehicle terminal further needs to feed back a fine-tuned model adjustment parameter to a server end. The server end maintains an image recognition model. Based on this, the server optimizes the image recognition model based on the model adjustment parameter reported by each in-vehicle terminal, thereby improving recognition capability of the image recognition model.

If an in-vehicle terminal cannot recognize, by using a local recognition model, a road image captured on site, the in-vehicle terminal may send the road image to the server, and the server invokes the image recognition model to recognize the road image and feeds back a recognition result to the in-vehicle terminal, so that a vehicle performs a corresponding feedback promptly.

3. Security protection scenario.

A security protection system transmits a video signal in a closed loop by using an optical fiber, a coaxial cable, or a microwave, and forms an independent and complete system from photographing to image display and recording. A security protection system not only greatly increases an observation distance of human eyes, but also improves the function of human eyes, and can replace humans for long-time work in a severe environment.

Considering complexity of actual environments, actual environments in different weathers, deployment positions, times, and the like are different. If each security protection system recognizes a captured image by using a local recognition model with the same model parameter, recognition results may be greatly different. Therefore, in this application, a security protection system trains a local recognition model by using a local fine-tuning policy. That is, security protection systems in different on-site environments may respectively use corresponding model optimization policies. Therefore, object recognition effect and stability can be improved. At the same time, the security protection system further needs to feed back a fine-tuned model adjustment parameter to a server end. The server end maintains an image recognition model. Based on this, the server optimizes the image recognition model based on the model adjustment parameter reported by each in-vehicle terminal, thereby improving recognition capability of the image recognition model.

If a security protection system cannot recognize, by using a local recognition model, an image captured on site, the security protection system may send the image to the server, and the server invokes the image recognition model to recognize the image and feeds back a recognition result to the security protection system. If there is a potential security danger, corresponding alarm information may be triggered.

The foregoing application scenarios are merely examples, and the data processing method provided in the embodiments may be further applied to other scenarios. This is not limited herein.

In this application, an image may be recognized by using a computer vision (CV) technology. The CV technology is a science that studies how to make a machine "see". Further, the CV technology refers to using a camera and a computer to replace human eyes to perform machine vision such as recognition and measurement on a target, and further perform graphics processing, so that the computer processes into an image that is more suitable for observing with human eyes or transmitting to an instrument for detection. As a scientific discipline, CV studies related theories and technologies and attempts to establish an AI system that can obtain information from images or multidimensional data. The CV technologies generally include technologies such as image processing, image recognition, image semantic understanding, image retrieval, optical character recognition (OCR), video processing, video semantic understanding, video content/behavioral recognition, three-dimensional object reconstruction, a 3D technology, virtual reality, augmented reality, simultaneous positioning, and map construction, and further include common biometric recognition technologies such as face recognition and fingerprint recognition.

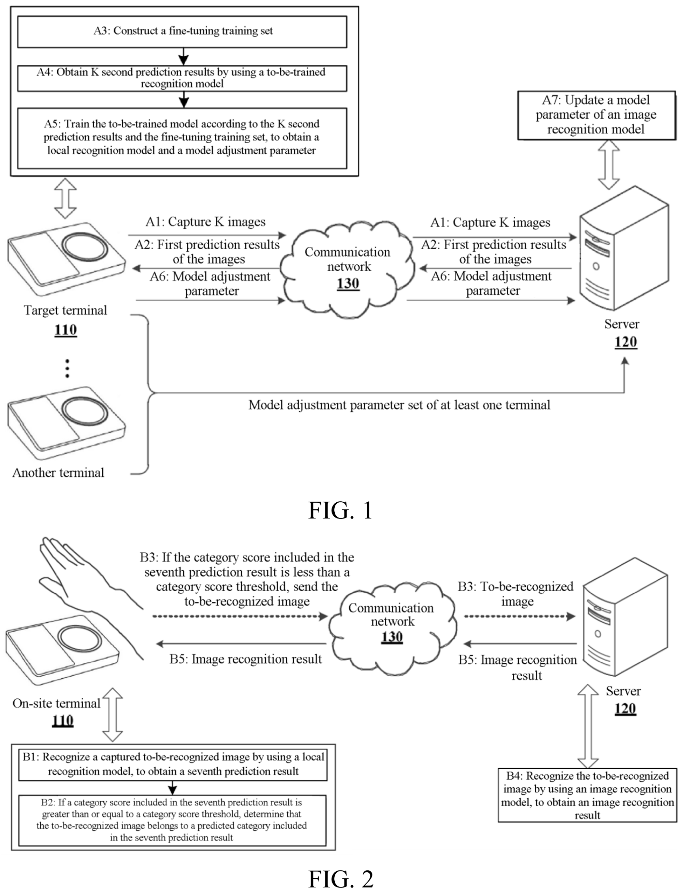

The data processing method provided in this application can be applied to an implementation environment shown in FIG. 1. The implementation environment includes an on-site terminal 110 and a server 120, and the on-site terminal 110 and the server 120 can communicate with each other through a communication network 130. The communication network 130 uses standard communication technologies and/or protocols, and is usually the Internet, but may alternatively be any other network, including but not limited to any combination of Bluetooth, a local area network (LAN), a metropolitan area network (MAN), a wide area network (WAN), a mobile network, a dedicated network, or a virtual dedicated network. In some embodiments, the foregoing data communication technology may be replaced or supplemented by a customized or dedicated data communication technology.

The on-site terminal 110 in this application includes, but is not limited to a mobile phone, a tablet computer, a laptop computer, a desktop computer, an intelligent voice interaction device, a smart home appliance, an in-vehicle terminal, an aircraft, and the like. A client is deployed on the on-site terminal 110. The client may run on the on-site terminal 110 in the form of a browser, or may run on the on-site terminal 110 in the form of an independent application (APP).

The server 120 in this application may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform.

With reference to the foregoing implementation environment, in operation A1, the on-site terminal 110 sends K images photographed in a current on-site environment to the server 120 by using the communication network 130. In operation A2, the server 120 recognizes the K images and sends a first prediction result of each image to the on-site terminal 110 by using the communication network 130. In operation A3, the on-site terminal 110 constructs a fine-tuning training set according to the K images and the K first prediction results transmitted by the server. In operation A4, the on-site terminal 110 obtains K second prediction results by using a to-be-trained model, that is, obtains, based on each image included in each group of fine-tuning training data in the fine-tuning training set and by using the to-be-trained model, a second prediction result corresponding to each image. In operation A5, the on-site terminal 110 trains the to-be-trained model according to the K second prediction results and the fine-tuning training set, to obtain a local recognition model and a model adjustment parameter, that is, trains the to-be-trained model according to the second prediction result corresponding to each image and the first prediction result of the image in the fine-tuning training set, to obtain the local recognition model and the model adjustment parameter. In operation A6, the on-site terminal 110 sends the model adjustment parameter to the server 120 by using the communication network 130. In operation A7, the server 120 updates a model parameter of an image recognition model according to the model adjustment parameter (that is, a model adjustment parameter set) reported by at least one terminal.

An implementation environment of an image recognition method is described below by using an example in which the on-site terminal 110 is a palm scanning terminal. Referring to FIG. 2, FIG. 2 is a schematic diagram of an implementation environment of an image recognition method according to an embodiment of this application. As shown in the figure, specifically, in operation B1, the on-site terminal 110 recognizes a captured to-be-recognized image by using a local recognition model, to obtain a seventh prediction result. The to-be-recognized image can be a palm image. In operation B2, the seventh prediction result includes a category score, and if the category score included in the seventh prediction result is greater than or equal to a category score threshold, it is determined that the to-be-recognized image belongs to a predicted category included in the seventh prediction result. In operation B3, if the category score included in the seventh prediction result is less than the category score threshold, the on-site terminal 110 sends the to-be-recognized image to the server 120 by using the communication network 130. In operation B4, the server 120 recognizes the to-be-recognized image by using an image recognition model, to obtain an image recognition result. In operation B5, the server 120 sends the image recognition result to the on-site terminal 110 by using the communication network 130, so that the on-site terminal 110 may perform a corresponding service according to the image recognition result.

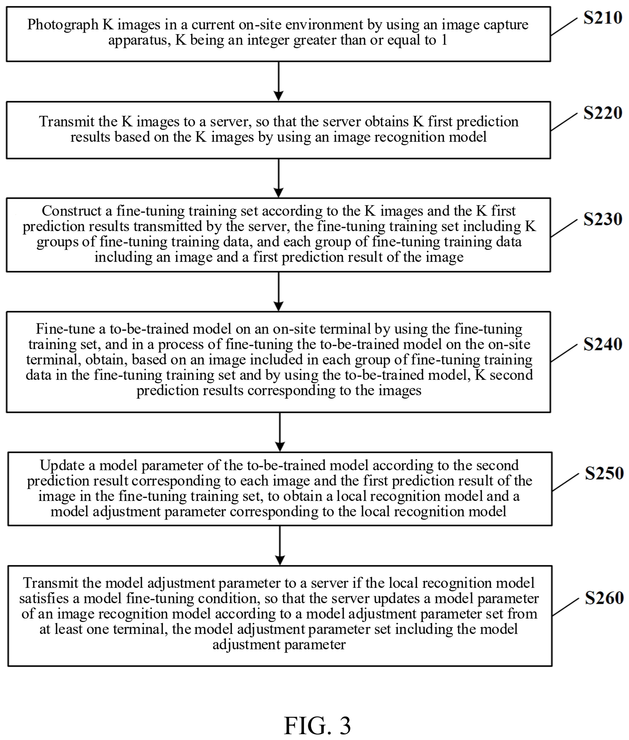

Based on the above description, a data processing method in this application is described from the perspective of an on-site terminal. Refer to FIG. 3. The data processing method in the embodiments of this application can be independently performed by the on-site terminal or performed by the on-site terminal together with a server. The method of this application includes:

210: Photograph K images in a current on-site environment by using an image capturing apparatus, K being an integer greater than or equal to 1.

In one or more embodiments, the on-site terminal invokes the image capturing apparatus (for example, a webcam, a camera, or a scanner) to photograph several images in the current environment, to obtain the K images.

220: Transmit the K images to a server, so that the server obtains K first prediction results based on the K images by using an image recognition model.

In one or more embodiments, the on-site terminal may sequentially send the K images to the server, or directly package the K images and then send the K images to the server together. Based on this, the server inputs each of the K images to the image recognition model, and outputs a first prediction result of each image by using the image recognition model, to obtain the K first prediction results. Each first prediction result includes a predicted category and a category score of an image.

The model in this application is a deep learning model, for example, a convolutional neural network (CNN) may be used. Deep learning is a machine learning technology, and aims to simulate a working manner of neurons of human brains, so that a computer can autonomously learn and make a decision. The deep learning model usually includes a plurality of layers, and each layer can learn different levels of representations of data.

In this application, the image recognition model deployed at the server end is a "large model". That is, compared with a model deployed on the terminal, the image recognition model has stronger computing power and higher recognition precision. The image recognition model is trained based on a large amount of data, learns a wider range of image features, and can precisely recognize various objects. However, because of a large computing amount, the image recognition model is generally deployed at the server end, and is not suitable for being run on the terminal. In an actual application, a local model of the terminal is compared with the "large model" at the server end and performs feedback, to achieve self-adjustment and optimization.

230: Construct a fine-tuning training set according to the K images and the K first prediction results transmitted by the server, the fine-tuning training set including K groups of fine-tuning training data, and each group of fine-tuning training data including an image and a first prediction result of the image.

In one or more embodiments, the on-site terminal may construct the fine-tuning training set according to the captured K images and the first prediction result of each image. The following uses 5 images as an example to describe a process of constructing the fine-tuning training set.

It is assumed that the K images sent by the on-site terminal to the server are respectively an image 1, an image 2, an image 3, an image 4, and an image 5. After invoking the image recognition model, the server sequentially recognizes the images. Referring to Table 1, Table 1 is an example of obtaining a first prediction result of each image after recognition. It is assumed that a predicted category in the first prediction result is an object identifier, and each object identifier uniquely indicates one object (for example, a user A).

Table 1

| Image serial number | First prediction result |
|---|---|
| Image 1 | Predicted category: 10003; category score: 0.95 |
| Image 2 | Predicted category: 10062; category score: 0.67 |
| Image 3 | Predicted category: 10947; category score: 0.70 |
| Image 4 | Predicted category: 10001; category score: 0.44 |

(continued)

| Image serial number | First prediction result |
|---|---|
| Image 5 | Predicted category: 10015; category score: 0.96 |

Based on this, K groups of fine-tuning training data may be constructed, and each group of fine-tuning training data includes an image and the first prediction result of the image. For example, a group of fine-tuning training data includes an image 1, an annotated category 10003, and an annotated category score 0.95.

240: Fine-tune a to-be-trained model on the on-site terminal by using the fine-tuning training set, and in a process of fine-tuning the to-be-trained model on the on-site terminal, obtain, based on an image included in each group of fine-tuning training data in the fine-tuning training set and by using the to-be-trained model, a second prediction result corresponding to each image.

In one or more embodiments, the to-be-trained model on the on-site terminal is fine-tuned by using the fine-tuning training set. In the process of fine-tuning the to-be-trained model on the on-site terminal, the on-site terminal sequentially inputs the captured K images to the to-be-trained model, and outputs the second prediction result of each image by using the to-be-trained model. Each second prediction result includes a predicted category and a category score of an image.

250: Update a model parameter of the to-be-trained model according to the second prediction result corresponding to each image and the first prediction result of the image in the fine-tuning training set, to obtain a local recognition model and a model adjustment parameter corresponding to the local recognition model.

In one or more embodiments, the fine-tuning training set includes the K images and the first prediction result of each image, and the first prediction result is used as annotation information of the image. The second prediction result of each of the K images is used as prediction information of the image. Based on this, the model parameter of the to-be-trained model may be updated based on the annotation information and the prediction information of each image by using a corresponding loss function (for example, a multi-class loss function), to obtain the local recognition model and the model adjustment parameter corresponding to the local recognition model. The model adjustment parameter includes, but is not limited to, a model parameter, a gradient, an optimization algorithm parameter, and a fine-tuning training set.

In this embodiment of this application, updating the model parameter of the to-be-trained model may be understood as fine-tuning the to-be-trained model. In machine learning, fine-tuning is a transfer learning technology and is usually performed based on a pre-trained model (for example, a model trained based on a large data set). Based on a new data set that is usually smaller, a parameter of the model is fine-tuned to optimize performance of a particular task.

260: Transmit the model adjustment parameter to a server if the local recognition model satisfies a model fine-tuning condition, so that the server updates a model parameter of an image recognition model according to a model adjustment parameter set from at least one terminal, the model adjustment parameter set including the model adjustment parameter.

In one or more embodiments, if the local recognition model satisfies the model fine-tuning condition, it indicates that a current fine-tuning manner of the on-site terminal can be adopted. Based on this, the on-site terminal may send the model adjustment parameter to the server. The server combines model adjustment parameters uploaded by different terminals, to obtain the model adjustment parameter set. Based on this, the server updates the model parameter of the image recognition model by using the model adjustment parameter set, that is, fine-tunes the image recognition model.

In this embodiment of this application, the server may obtain the image recognition model with a better recognition effect based on distributed training. Distributed training refers to dividing a model training workload and sharing the workload with a plurality of microprocessors (for example, a plurality of terminals). The image recognition model has many parameters and large training data, which exceeds a processing capability of a single machine. Therefore, distributed parallel speed-up is needed. A parallel mechanism includes data parallel (DP), model parallel (MP), pipeline parallel (PP), and hybrid parallel (HP). A structural design includes an architecture based on a parameter server, an architecture based on reduce, an architecture based on a message-passing interface (MPI), and the like.

An embodiment of this application provides a data processing method. In the foregoing manner, the terminal may fine-tune the local model based on the images captured in the on-site environment, and report a fine-tuned model adjustment parameter to the server. The server updates the image recognition model according to the model adjustment parameter set reported by terminals. Therefore, the image recognition model is applicable to various specific on-site environments to improve model recognition precision, and processing resources of the server are saved and model learning efficiency is improved.

Based on the one or more embodiments corresponding to FIG. 3, in another exemplary embodiment provided in the embodiments of this application, the method may further include:

transmitting a model training request to the server, so that the server determines, according to the model training request, a training data set applied to the on-site terminal;

receiving an initial training set transmitted by the server, where the initial training set includes M groups of initial training data, and each group of initial training data includes an image and an annotation result of the image;

obtaining M initial prediction results based on M images included in the initial training set and by using an initial recognition model, where each initial prediction result includes a predicted category and a category score of an image; and

updating a model parameter of the initial recognition model according to the M initial prediction results and M annotation results included in the initial training set, to obtain the to-be-trained model.

In one or more embodiments, a manner of obtaining the to-be-trained model is described. As can be known from the foregoing embodiment, after the on-site terminal is deployed in a site, the on-site terminal may send the model training request to the server, so that the server returns the training data set to the on-site terminal. Another terminal may also generate the to-be-trained model in a similar manner. Details are not described herein again.

Assuming that the on-site terminal is a palm scanning terminal of a playground, the server may obtain the training data set from a large quantity of data sets based on the model training request sent by the on-site terminal. The training data set includes palm images of users that have registered with the playground for quick access and annotation results (for example, user identifiers) of the images, and the training data set is used as an initial training set. The on-site terminal receives the initial training set sent by the server, where the initial training set includes M groups of initial training data, and each group of initial training data includes an image and an annotation result of the image, that is, the initial training set includes M images.

Based on this, the on-site terminal sequentially inputs the M images to the initial recognition model, and outputs, by using the initial recognition model, an initial prediction result corresponding to each image. Each initial prediction result includes a predicted category and a category score of the image. The model parameter of the initial recognition model may be updated based on the annotation result and the initial prediction result of each image by using a corresponding loss function (for example, a multi-class loss function), to obtain the to-be-trained model.

The initial recognition model is a pre-training model (PTM), and is specifically trained based on massive unmarked data by using a deep neural network (DNN) with large parameters. The PTM is enabled to extract common features from data based on a function approximation capability of the DNN with large parameters, uses technologies such as fine-tuning, parameter-efficient fine-tuning (PERT), and prompt-tuning, and is applicable to downstream tasks. Therefore, the PTM can achieve an ideal effect in a few-shot or zero-shot scenario.

In addition, in an embodiment of this application, a manner of obtaining the to-be-trained model is provided. In the foregoing manner, the terminal performs training by using the training data set delivered by the server, to obtain the to-be-trained model that can be used locally. On one hand, the terminal can have an image recognition capability. On the other hand, when performing model fine-tuning, the terminal can better adapt to a local environment.

Based on the one or more embodiments corresponding to FIG. 3, in another exemplary embodiment provided in the embodiments of this application, before the photographing K images in a current on-site environment by using an image capturing apparatus, the method may further include:

obtaining on-site environment information of the on-site terminal, where the on-site environment information includes at least one of light intensity and background noise;

adjusting a first application parameter of the image capturing apparatus in response to a first adjustment operation on the image capturing apparatus if the light intensity included in the on-site environment information does not fall within a light intensity interval, where the first application parameter includes at least one of a shutter speed, a light sensitivity parameter, and an exposure compensation parameter; and

adjusting a second application parameter of the image capturing apparatus in response to a second adjustment operation on the image capturing apparatus if the background noise included in the on-site environment information is greater than or equal to a background noise threshold, where the second application parameter includes at least one of an acutance parameter, a light sensitivity parameter, and a denoising parameter.

In one or more embodiments, a manner of adjusting the image capturing apparatus is described. As can be known from the foregoing embodiment, to capture images with better quality for model training and model reasoning, the image capturing apparatus can be adjusted based on the on-site environment information. The on-site terminal is used as an example for description below. In an actual application, another terminal may also optimize the image capturing apparatus in a similar manner. Details are not described herein again.

In a possible implementation, a camera, a light sensor, or the like of the on-site terminal may be used to obtain the on-site environment information of the on-site terminal. For example, light intensity and background noise on site may be obtained by using a camera. For another example, light intensity, a color temperature, and the like on site may be obtained by using a light sensor.

Exemplarily, if the light intensity does not fall within the light intensity interval (that is, the light intensity is greater than or equal to a maximum light intensity value, or the light intensity is less than or equal to a minimum light intensity value), the first application parameter of the image capturing apparatus needs to be adjusted. The first application parameter includes, but is not limited to, a shutter speed, a light sensitivity parameter, and an exposure compensation parameter. In one case, if the light intensity is greater than or equal to the maximum light intensity value, the shutter speed may be increased, or the light sensitivity (ISO) parameter may be decreased, or the exposure compensation (EV) parameter may be decreased. In another case, if the light intensity is less than or equal to the minimum light intensity value, the shutter speed may be decreased, or the ISO parameter may be increased, or the EV parameter may be increased.

The maximum light intensity value may be set to 1000 lx, and the minimum light intensity value may be set to 10 lx. This is merely an example and is not understood as limitation on this application.

Exemplarily, if the background noise is greater than or equal to the background noise threshold, the second application parameter of the image capturing apparatus needs to be adjusted. The second application parameter includes, but is not limited to, an acutance parameter, an ISO parameter, and a denoising parameter. Based on this, when the background noise is relatively loud, the acutance parameter may be decreased, or the ISO parameter may be decreased, or the denoising parameter (for example, a space-domain denoising parameter or a time-domain denoising parameter) may be increased.

The background noise threshold may be set to 50 dB. This is merely an example and is not understood as limitation on this application.

"In response to" in this application is configured for indicating a condition or a status on which a to-be-performed operation depends. When the condition or the status is met, one or more operations may be performed. These operations may be in real time, or may have a delay.

Next, in this embodiment of this application, a manner of adjusting the image capturing apparatus is provided. In the foregoing manner, the image capturing apparatus is adjusted based on the on-site environment information, so that the quality of the captured image can be improved. Based on this, the local model is automatically fine-tuned, so that the local model of the terminal can better adapt to on-site light conditions, and the model recognition capability can be improved.

Based on the one or more embodiments corresponding to FIG. 3, in another exemplary embodiment provided in the embodiments of this application, after the updating a model parameter of the to-be-trained model according to the second prediction result corresponding to each image and the first prediction result of the image in the fine-tuning training set, to obtain a local recognition model and a model adjustment parameter corresponding to the local recognition model, the method may further include:

obtaining recognition accuracy of the local recognition model for N images, where N is an integer greater than or equal to 1, and the N images are photographed by the image capturing apparatus; and

determining that the local recognition model satisfies the model fine-tuning condition if the recognition accuracy is greater than or equal to an accuracy threshold.

In one or more embodiments, a manner of determining whether the model fine-tuning condition is satisfied is described. As can be known from the foregoing embodiment, after completing model fine-tuning, the on-site terminal further needs to evaluate a fine-tuning effect. That is, recognition results of the local recognition model and the image recognition model of the server end are compared. If the recognition result of the local recognition model is the same as or close to the result of the image recognition model, it may be considered that fine-tuning is successful. Otherwise, fine-tuning may need to be performed again. The on-site terminal is used as an example for description below. In an actual application, another terminal may also determine whether a fine-tuning result is desirable in a similar manner. Details are not described herein again.

The on-site terminal automatically fine-tunes the local to-be-trained model by using collected on-site information, to obtain a local recognition model. Fine-tuning refers to fine-tuning a model parameter based on the to-be-trained model according to a new task or data set. In this process, the fine-tuning operation is performed according to on-site environment information. For example, if on-site light intensity changes, sensitivity of the model to a light change may need to be adjusted. For another example, if on-site background noise increases, the anti-interference capability of the model against noise may need to be enhanced. A fine-tuning process usually involves gradient descent or another optimization algorithm, to minimize a recognition error in a new environment condition.

In a possible implementation, a manner of obtaining recognition accuracy of the local recognition model for the N images may be: transmitting the N images photographed by the image capturing apparatus to the server, so that the server obtains N third prediction results based on the N images by using the image recognition model; receiving the N third prediction results transmitted by the server; obtaining N fourth prediction results based on the N images by using the local recognition model; and performing verification on the N fourth prediction results according to the N third prediction results, to obtain the recognition accuracy for the N images.

In an actual execution process, the on-site terminal may send the N images photographed by using the image capturing apparatus to the server. The N images may be captured by the on-site terminal after the on-site terminal obtains the local recognition model through training, or may be some images randomly selected from the K images. The N images satisfy an on-site light condition of the on-site terminal. Based on this, on one hand, the server uses the N images as input of the image recognition model, to obtain the third prediction result of each image by using the image recognition model. Each third prediction result includes a predicted category and a category score of an image. On the other hand, the on-site terminal uses the N images as input of the local recognition model, to obtain the fourth prediction result of each image by using the local recognition model. Each fourth prediction result includes a predicted category and a category score of an image.

After receiving the N third prediction results, the on-site terminal may use the N third prediction results as standard results, to perform verification on the N fourth prediction results to obtain recognition accuracy for the N images. For ease of description, referring to Table 2, Table 2 is an example of N third prediction results.

Table 2

| Image serial number | Third prediction result |
|---|---|
| Image 1 | Predicted category: 10011; Category score: 0.95 |
| Image 2 | Predicted category: 10053; Category score: 0.91 |
| Image 3 | Predicted category: 10237; Category score: 0.78 |
| Image 4 | Predicted category: 10000; Category score: 0.40 |
| Image 5 | Predicted category: 10066; Category score: 0.92 |

Referring to Table 3, Table 3 is an example of N fourth prediction results.

Table 3

| Image serial number | Fourth prediction result |
|---|---|
| Image 1 | Predicted category: 10011; Category score: 0.96 |
| Image 2 | Predicted category: 10023; Category score: 0.80 |
| Image 3 | Predicted category: 10237; Category score: 0.78 |
| Image 4 | Predicted category: 10001; Category score: 0.92 |
| Image 5 | Predicted category: 10066; Category score: 0.91 |

Based on this, the N third prediction results and the N fourth prediction results are compared. If the third prediction result and the fourth prediction result of the image are the same or close to each other, it indicates that recognition of the image succeeds. It is assumed that the third prediction result and the fourth prediction result being close to each other is specifically "predicted categories are the same and an absolute value of a difference between category scores is less than or equal to 0.2". As can be seen, the third prediction result and the fourth prediction result of the image 1 are close to each other, the third prediction result and the fourth prediction result of the image 2 are different, the third prediction result and the fourth prediction result of the image 3 are the same, the third prediction result and the fourth prediction result of the image 4 are different, and the third prediction result and the fourth prediction result of the image 5 are close to each other. Therefore, 3 of the 5 images are successfully recognized, that is, the recognition accuracy is 0.6. When the recognition accuracy is greater than or equal to the accuracy threshold, it is considered that the local recognition model of the on-site terminal satisfies the model fine-tuning condition, that is, the current fine-tuning is successful.

In the foregoing manner, the N third prediction results outputted by the server by using the image recognition model are used as a determining criterion to perform verification on the N fourth prediction results. Because the image recognition model deployed on the server is relatively accurate, the third prediction result outputted by the image recognition model is also relatively accurate and can be used as a determining criterion, to accurately perform verification on recognition accuracy of the local recognition model.

Next, in this embodiment of this application, a manner of determining whether the model fine-tuning condition is satisfied is provided. In the foregoing manner, an on-site automatic fine-tuning module implements a closed loop of obtaining the on-site environment information, constructing the fine-tuning training set, fine-tuning the model, and evaluating a fine-tuning result, to automatically optimize the model, so that the model can better adapt to an on-site light condition.

Based on the one or more embodiments corresponding to FIG. 3, in another exemplary embodiment provided in the embodiments of this application, after the updating a model parameter of the to-be-trained model according to the second prediction result corresponding to each image and the first prediction result of the image in the fine-tuning training set, to obtain a local recognition model and a model adjustment parameter corresponding to the local recognition model, the method may further include:

obtaining recognition accuracy of the local recognition model for N images, where N is an integer greater than or equal to 1, and the N images are photographed by the image capturing apparatus; and

transmitting the model adjustment parameter to T terminals if the recognition accuracy is greater than or equal to an accuracy threshold, so that the T terminals respectively update, according to the model adjustment parameter, model parameters of corresponding to-be-trained models, to obtain T recognition models, where the T terminals are associated with the on-site terminal, and T is an integer greater than or equal to 1; obtaining a voting score corresponding to each of the T terminals, where the voting score is determined according to a prediction result of a recognition model and a prediction result of the image recognition model; determining a comprehensive recognition score according to the voting score corresponding to each terminal; and determining, if the comprehensive recognition score is greater than or equal to a recognition score threshold, that the local recognition model satisfies the model fine-tuning condition.

In one or more embodiments, another manner of determining whether the model fine-tuning condition is satisfied is described. As can be known from the foregoing embodiment, after completing model fine-tuning, the on-site terminal further needs to evaluate a fine-tuning effect based on recognition accuracy. For a calculation manner of the recognition accuracy, refer to the foregoing embodiment, and details are not described herein again.

Specifically, when the recognition accuracy is greater than or equal to the accuracy threshold, the on-site terminal may separately send the model adjustment parameter to the T terminals that are associated with the on-site terminal. In this way, the model adjustment parameter (that is, a fine-tuning result) is synchronized, that is, the model adjustment parameter of the on-site terminal is synchronized to another terminal in the same environment. Each terminal fine-tunes a to-be-trained model according to the model adjustment parameter, to obtain a corresponding recognition model. In addition, each terminal needs to determine, based on a synchronous voting mechanism, whether the model adjustment parameter is proper. If the model adjustment parameter is proper, the terminal may vote to approve. Otherwise, if the model adjustment parameter is improper, the terminal may vote to oppose. Exemplarily, a voting score corresponding to voting to approve may be set to 1, and a voting score corresponding to voting to oppose may be set to 0. Based on this, the comprehensive recognition score may be calculated according to the voting scores of the T terminals. Whether the local recognition model satisfies the model fine-tuning condition is determined by using the comprehensive recognition score.

In this embodiment of this application, a manner of obtaining the recognition accuracy of the local recognition model for the N images is similar to the foregoing manner, and details are not described herein again.

In this application, the synchronous voting mechanism is used to synchronize model fine-tuning results between a plurality of terminals. This mechanism allows a terminal to vote according to validity of a model adjustment parameter of another terminal, to determine whether to accept a fine-tuning manner of another terminal. By combining the voting scores, it may be determined whether to feed back a fine-tuning manner to the server, so as to integrate with training of the image recognition model.

Next, in this embodiment of this application, another manner of determining whether the model fine-tuning condition is satisfied is provided. In the foregoing manner, the terminal synchronizes, to another on-site terminal, the model adjustment parameter obtained after model optimization, thereby further improving image recognition accuracy. In addition, the terminals can self-learn and optimize based on the synchronous voting mechanism for fine-tuning results of terminals, thereby improving intelligence of the system. Based on the synchronous voting mechanism for fine-tuning results of terminals, the terminals may perform real-time optimization according to on-site environment information, so that the terminals better adapt to an environment change, thereby improving an image recognition effect.

Based on the one or more embodiments corresponding to FIG. 3, in another exemplary embodiment provided in the embodiments of this application, the determining a comprehensive recognition score according to the voting score corresponding to each terminal may specifically include:

summing up voting scores of the T terminals, to obtain a total voting score; and

obtaining the comprehensive recognition score according to a ratio of the total voting score to the value T.

In one or more embodiments, a manner of determining the comprehensive recognition score based on the voting scores is described. As can be known from the foregoing embodiment, the on-site terminal transmits the model adjustment parameter (that is, the fine-tuning result) to the T terminals based on a network communications technology. After receiving the model adjustment parameter, each of the T terminals needs to separately fine-tune the local to-be-trained model according to the model adjustment parameter, and perform verification on a fine-tuning effect. A perform verification on manner includes comparing model recognition accuracy before fine-tuning with model recognition accuracy after fine-tuning, or comparing a difference between recognition results of the fine-tuned recognition model and the image recognition model of the server end, or the like.

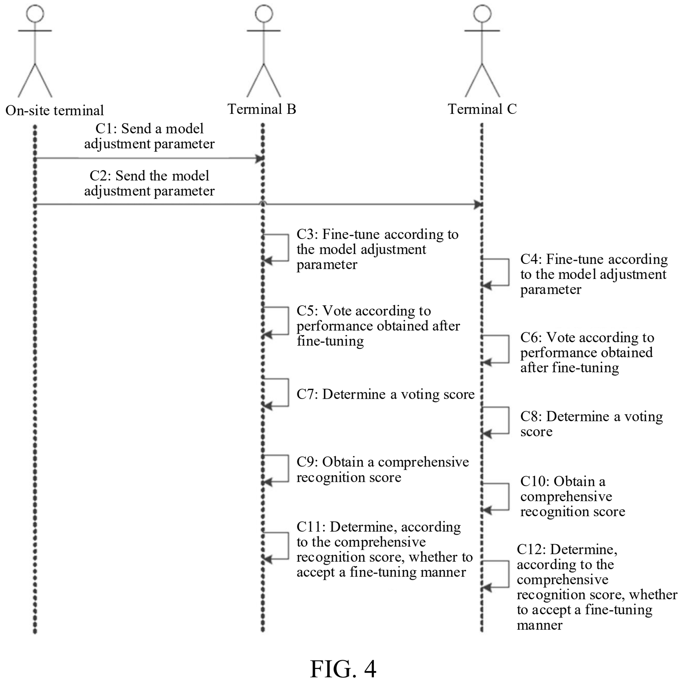

Based on this, the terminal votes according to a fine-tuning effect. A majority voting method may be used in this process. In this way, it may be determined, according to the voting results of the T terminals, whether the current model adjustment parameter can be adopted. For ease of understanding, refer to FIG. 4. FIG. 4 is a schematic interactive flowchart of voting based on a synchronous voting mechanism according to an embodiment of this application. As shown in the figure, specifically:

In operation C1, an on-site terminal packages the model adjustment parameter into an information packet, and sends the information packet to a terminal B. The model adjustment parameter includes a model parameter, a gradient, and an optimization algorithm parameter. The optimization algorithm parameter includes, but is not limited to, an optimization algorithm, a learning rate, a quantity of iterations, and the like.

In operation C2, the on-site terminal packages the model adjustment parameter into an information packet, and sends the information packet to a terminal C.

An execution sequence of operation C1 and operation C2 is not limited.

In operation C3, the terminal B fine-tunes a local to-be-trained model according to the received model adjustment parameter, to obtain a recognition model.

In operation C4, the terminal C fine-tunes a local to-be-trained model according to the received model adjustment parameter, to obtain a recognition model.

An execution sequence of operation C3 and operation C4 is not limited.

In operation C5, the terminal B performs a performance test based on the recognition model obtained after the fine-tuning, and if the performance of the model is improved after fine-tuning, votes to approve, or if the performance of the model is degraded after fine-tuning, votes to oppose. For example, the terminal B compares a prediction result outputted by the recognition model with a prediction result outputted by the server based on the image recognition model, to obtain recognition accuracy, and the terminal B votes according to the recognition accuracy.

In operation C6, the terminal C performs a performance test based on the recognition model obtained after the fine-tuning, and if the performance of the model is improved after fine-tuning, votes to approve, or if the performance of the model is degraded after fine-tuning, votes to oppose. For example, the terminal C compares a prediction result outputted by the recognition model with a prediction result outputted by the server based on the image recognition model, to obtain recognition accuracy, and the terminal C votes according to the recognition accuracy.

An execution sequence of operation C5 and operation C6 is not limited.

In operation C7, if the recognition accuracy obtained by the terminal B is greater than or equal to the accuracy threshold, the terminal B votes that fine-tuning is successful. Therefore, it may be obtained that the voting score is 1. Otherwise, if the recognition accuracy obtained by the terminal B is less than the accuracy threshold, the terminal B votes that fine-tuning is unsuccessful. Therefore, it may be obtained that the voting score is 0.

In operation C8, if the recognition accuracy obtained by the terminal C is greater than or equal to the accuracy threshold, the terminal C votes that fine-tuning is successful. Therefore, it may be obtained that the voting score is 1. Otherwise, if the recognition accuracy obtained by the terminal C is less than the accuracy threshold, the terminal C votes that fine-tuning is unsuccessful. Therefore, it may be obtained that the voting score is 0.

An execution sequence of operation C7 and operation C8 is not limited.

In operation C9, exemplarily, in one manner, the terminal B receives the voting score sent by the terminal C, and calculates the comprehensive recognition score with reference to the voting score of the terminal B. In another manner, the terminal B and the terminal C separately send their own voting scores to the on-site terminal, and the on-site terminal performs summarizing calculation, to obtain the comprehensive recognition score. Then, the on-site terminal sends the comprehensive recognition score to the terminal B.

In operation C10, exemplarily, in one manner, the terminal C receives the voting score sent by the terminal B, and calculates the comprehensive recognition score with reference to the voting score of the terminal C. In another manner, the terminal B and the terminal C separately send their own voting scores to the on-site terminal, and the on-site terminal performs summarizing calculation, to obtain the comprehensive recognition score. Then, the on-site terminal sends the comprehensive recognition score to the terminal C.

An execution sequence of operation C9 and operation C10 is not limited.

In operation C11, if the comprehensive recognition score is greater than or equal to the score threshold (for example, 0.5), it indicates that most terminals vote to approve. Therefore, the terminal B can accept the fine-tuning manner. If the comprehensive recognition score is less than the score threshold, it indicates that most terminals vote to oppose. Therefore, the terminal B does not accept the fine-tuning manner.

In operation C12, if the comprehensive recognition score is greater than or equal to the score threshold (for example, 0.5), it indicates that most terminals vote to approve. Therefore, the terminal C can accept the fine-tuning manner. If the comprehensive recognition score is less than the score threshold, it indicates that most terminals vote to oppose. Therefore, the terminal C does not accept the fine-tuning manner.

The majority voting method is described below with reference to specific examples. Assuming that the voting score of the terminal B is 1 and the voting score of the terminal C is 0, the total voting score is 1 (that is, 1+0=1). The comprehensive recognition score is calculated according to a ratio of the total voting score to the value T. In this embodiment, T is 2, and based on this, the comprehensive recognition score is obtained as 0.5.

Next, in this embodiment of this application, a manner of determining the comprehensive recognition score based on the voting scores is described. In the foregoing manner, each terminal that is associated votes on the fine-tuning result (that is, the model adjustment parameter) and an average value of voting scores is obtained, which serves as the basis for measuring whether the fine-tuning manner is accepted. This provides a specific feasible implementation of the solution. Therefore, the feasibility and the operability of the solution are improved.

Based on the one or more embodiments corresponding to FIG. 3, in another exemplary embodiment provided in the embodiments of this application, the determining a comprehensive recognition score according to the voting score corresponding to each terminal may specifically include:

obtaining a weight parameter set corresponding to each of the T terminals, where the weight parameter set includes at least one of a device weight, an environment weight, and a preference weight;

weighting, for each of the T terminals, the voting score of the terminal by using the weight parameter set of the terminal, to obtain a weighted voting score of the terminal; and

determining the comprehensive recognition score according to the weighted voting score corresponding to each of the T terminals.

In one or more embodiments, another manner of determining the comprehensive recognition score based on the voting scores is described. As can be known from the foregoing embodiment, the on-site terminal transmits the model adjustment parameter (that is, the fine-tuning result) to the T terminals based on a network communications technology. After receiving the model adjustment parameter, each of the T terminals needs to separately fine-tune the local to-be-trained model according to the model adjustment parameter, and perform verification on a fine-tuning effect.

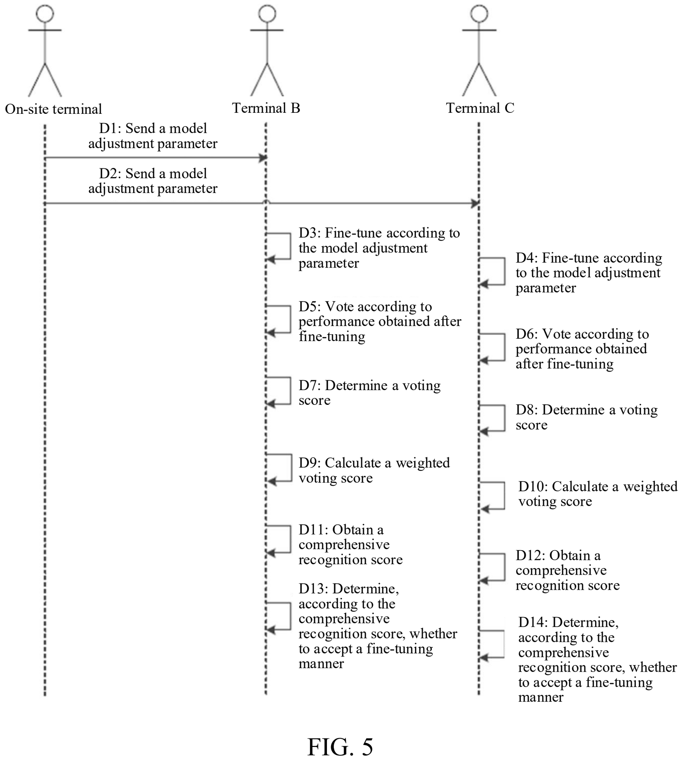

Based on this, the terminal votes according to a fine-tuning effect. A weight voting method may be used in this process. In this way, it may be determined, according to the voting results of the T terminals, whether the current model adjustment parameter can be adopted. In the weight voting method, a weight parameter set corresponding to each terminal needs to be considered, where the weight parameter set includes at least one of a device weight, an environment weight, and a preference weight. For ease of understanding, referring to 5, FIG. 5 is another schematic interactive flowchart of voting based on a synchronous voting mechanism according to an embodiment of this application. As shown in the figure, specifically:
Operation D1 to operation D8 in this embodiment are similar to operation C1 to operation C8 in the embodiment shown in FIG. 4. Details are not described herein again.

In operation D9, exemplarily, in one manner, the terminal B calculates a weighted voting score according to the voting score and a weight parameter set of the terminal B. In another manner, the terminal B sends the voting score and the weight parameter set of the terminal B to the on-site terminal, and the on-site terminal calculates the weighted voting score of the terminal B according to the voting score and the weight parameter set sent by the terminal B.

In operation D10, exemplarily, in one manner, the terminal C calculates a weighted voting score according to the voting score and a weight parameter set of the terminal C. In another manner, the terminal C sends the voting score and the weight parameter set of the terminal C to the on-site terminal, and the on-site terminal calculates the weighted voting score of the terminal C according to the voting score and the weight parameter set sent by the terminal C.

An execution sequence of operation D9 and operation D10 is not limited.

In operation D11, exemplarily, in one manner, the terminal B receives the weighted voting score sent by the terminal C, and calculates the comprehensive recognition score with reference to the weight parameter set of the terminal B and the weight parameter set of the terminal C. In another manner, the terminal B and the terminal C separately send their own weighted voting scores to the on-site terminal, and the on-site terminal performs summarizing calculation, to obtain the comprehensive recognition score. Then, the on-site terminal sends the comprehensive recognition score to the terminal B.

In operation D12, exemplarily, in one manner, the terminal C receives the weighted voting score sent by the terminal B, and calculates the comprehensive recognition score with reference to the weight parameter set of the terminal C and the weight parameter set of the terminal B. In another manner, the terminal B and the terminal C separately send their own weighted voting scores to the on-site terminal, and the on-site terminal performs summarizing calculation, to obtain the comprehensive recognition score. Then, the on-site terminal sends the comprehensive recognition score to the terminal C.

An execution sequence of operation D11 and operation D12 is not limited.

Operation D13 and operation D14 in this embodiment are similar to operation C11 and operation C12 in the embodiment shown in FIG. 4. Details are not described herein again.

The weight voting method is described below with reference to specific examples. It is assumed that the weight parameter set includes a device weight, an environment weight, and a preference weight. The device weight may be determined according to factors such as performance of the terminal and history prediction accuracy. For example, better terminal performance indicates a higher device weight. The environment weight may be determined according to an on-site environment in which the terminal is located. For example, if light of the on-site environment in which the terminal is located is excessively strong or excessively weak, the environment weight is higher, but if light intensity falls within a light intensity interval, the environment weight is lower. The preference weight may be determined according to preferences of the terminal for different optimization algorithm parameters. For example, if an optimization algorithm parameter used by the terminal is the same as an optimization algorithm parameter of the on-site terminal, the preference weight is higher.

An adjustment manner of the device weight, the environment weight, and the preference weight may be flexibly adjusted according to an actual case. This is merely an example and is not understood as limitation on this application.

Based on this, the comprehensive recognition score for the terminal B and the terminal C may be calculated in the following manner:

$$V_{weighted\_average} = (w_B * V_B * I_B * P_B + w_C * V_C * I_C * P_C)/(w_B * I_B * P_B + w_C * I_C * P_C);$$

where $V_{weighted\_average}$ represents a comprehensive recognition score, $w_B$ represents a device weight of the terminal B, $w_C$ represents a device weight of the terminal C, $V_B$ represents a voting score of the terminal B, for example, 1 or 0, $V_C$ represents a voting score of the terminal C, $I_B$ represents an environment weight of the terminal B, $I_C$ represents an environment weight of the terminal C, $P_B$ represents a preference weight of the terminal B, $P_C$ represents a preference weight of the terminal C, $w_B * V_B * I_B * P_B$ represents a weighted voting score of the terminal B, and $w_C * V_C * I_C * P_C$ represents a weighted voting score of the terminal C.

Next, in this embodiment of this application, another manner of determining the comprehensive recognition score based on the voting scores is described. In the foregoing manner, each terminal that is associated votes on the fine-tuning result (that is, the model adjustment parameter) and a weight parameter of each terminal is introduced to calculate a voting score, which serves as the basis for measuring whether the fine-tuning manner is accepted. This provides a specific feasible implementation of the solution. In addition, a difference between performance of different terminals is considered, so that the fine-tuning result can be voted on more comprehensively.

Based on the one or more embodiments corresponding to FIG. 3, in another exemplary embodiment provided in the embodiments of this application, before the transmitting the model adjustment parameter to T terminals, the method may further include:

determining, if the on-site terminal and at least one terminal are located in the same location, that the at least one terminal is associated with the on-site terminal, and determining the at least one terminal as the T terminals; or

determining, if the same binding object is set for the on-site terminal and at least one terminal, that the at least one terminal is associated with the on-site terminal, and determining the at least one terminal as the T terminals; or

determining, if the on-site terminal and at least one terminal are connected to the same access point, that the at least one terminal is associated with the on-site terminal, and determining the at least one terminal as the T terminals.

In one or more embodiments, three manners of establishing an association between terminals is described. As can be known from the foregoing embodiment, the on-site terminal is associated with the T terminals. Based on this, the on-site terminal may communicate with the T terminals. Three manners of constructing an association between terminals are described below with reference to examples.

Manner 1: Based on a geographic location.

Specifically, terminals belonging to the same location are used as terminals that are associated with each other. The same location may be specifically an administrative area, for example, a province-level administrative area, a prefecture-level administrative area, a county-level administrative area, or a township-level administrative area. Alternatively, the same location may be a self-defined area, for example, a community, a school, or an office building. The terminal has a positioning function, and a user may establish an association between terminals located in the same geographical area.

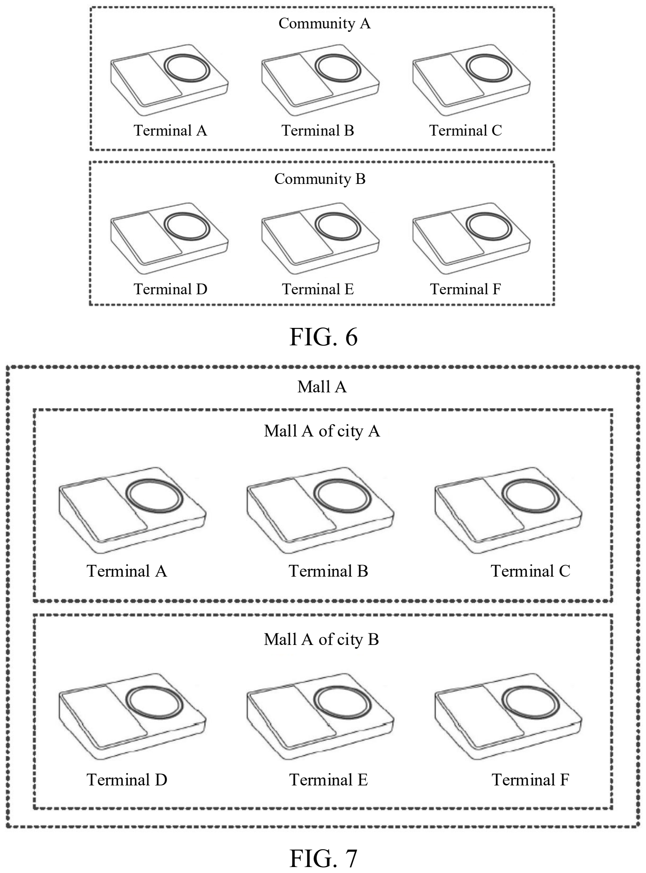

For ease of understanding, refer to FIG. 6. FIG. 6 is a schematic diagram of establishing an association between terminals according to an embodiment of this application. As shown in the figure, a community is used as a location, that is, a terminal A, a terminal B, and a terminal C in a community A are associated with each other. A terminal D, a terminal E, and a terminal F in a community B are associated with each other. The terminals in the community A are not associated with the terminals in the community B. Therefore, assuming that the on-site terminal is the terminal A, the T terminals include the terminal B and the terminal C.

Manner 2: Based on a binding relationship.

Specifically, a user may self-define a binding relationship between terminals. For example, a business identifier may be set for each terminal, and based on this, terminals having the same business identifier may be bound.

For ease of understanding, refer to FIG. 7. FIG. 7 is another schematic diagram of establishing an association between terminals according to an embodiment of this application. As shown in the figure, a mall A is used as an example. Assuming that the mall A has branches in both a city A and a city B, a terminal A, a terminal B, and a terminal C in the mall A of the city A, and a terminal D, a terminal E, and a terminal F in the mall A of the city B are associated with each other. Therefore, assuming that the on-site terminal is the terminal A, the T terminals include the terminal B, the terminal C, the terminal D, the terminal E, and the terminal F.

Manner 3: Based on a network connection.

Specifically, an association is established between terminals connected to the same access point. The access point may be a wireless hotspot (for example, wireless fidelity (WiFi)), or may be a wired access point.

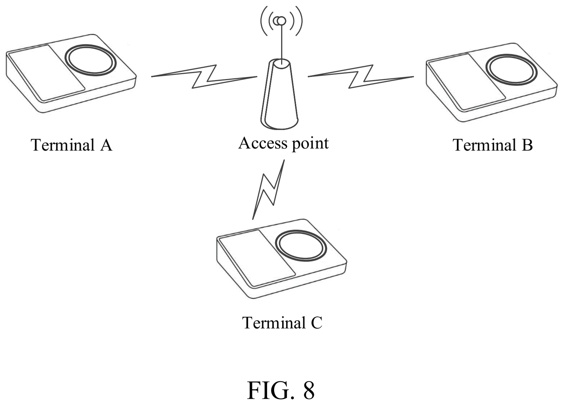

For ease of understanding, refer to FIG. 8. FIG. 8 is another schematic diagram of establishing an association between terminals according to an embodiment of this application. As shown in the figure, a terminal A, a terminal B, and a terminal C are connected to the same access point. Therefore, the three terminals are associated with each other. Assuming that the on-site terminal is the terminal A, the T terminals include the terminal B and the terminal C.

Next, in this embodiment of this application, three manners of establishing an association between terminals are described. In the foregoing manner, an association may be established between a plurality of terminals according to an actual requirement, so that these terminals can perform corresponding processing (for example, voting and status monitoring) as a cluster. This improves implementation flexibility of the solution.

Based on the one or more embodiments corresponding to FIG. 3, in another exemplary embodiment provided in the embodiments of this application, after the determining that the local recognition model satisfies the model fine-tuning condition, the method may further include:

obtaining a to-be-tested image;

obtaining a fifth prediction result based on the to-be-tested image by using the local recognition model;

obtaining T sixth prediction results from the T terminals, where each sixth prediction result is obtained by the terminal based on the to-be-tested image by using the recognition model; and

performing, if determining that the local recognition model is already in a model stable state according to the fifth prediction result and the T sixth prediction results, a corresponding service by using the local recognition model.

In one or more embodiments, a manner of monitoring a model status based on a plurality of associated terminals is described. As can be known from the foregoing embodiment, based on the on-site terminal and the T terminals, the server may further monitor and evaluate statuses of the terminals, to determine whether the terminals have completed fine-tuning of the model and whether the model obtained after fine-tuning is already stable.

For example, monitoring and evaluating a status of a terminal mainly includes a fine-tuning status of a model and an operation status of the terminal. That is, the terminals need to be able to periodically send status reports to the server.

Content of the report includes a current fine-tuning status (for example, fine-tuning is being performed or fine-tuning is completed), an operation status (for example, normal running or fault), and the like. The server may learn the statuses of the terminals according to these reports.

Whether the model is already stable may usually be evaluated by comparing recognition results of models for the same image (that is, a to-be-tested image). For example, the on-site terminal uses the to-be-tested image as input of the local recognition model, and obtains the fifth prediction result by using the local recognition model. The other T terminals respectively use the to-be-tested image as input of the recognition models, and obtain sixth prediction results by using the recognition models. If the fifth prediction result is the same as or close to the T sixth prediction results, it is considered that the model is already in a stable status. If the fifth prediction result is greatly different from the T sixth prediction results, fine-tuning may need to be continued.

In an actual application, the server may compare the fifth prediction result with the T sixth prediction results. Based on this, the server may determine, according to a status of the terminal, whether the on-site terminal has completed fine-tuning, and determine, according to the fifth prediction result and the T sixth prediction results, that the model is already in a stable status. If the two conditions are satisfied, it is considered that a corresponding service has started to be performed on site. Otherwise, fine-tuning of the model or maintenance of the terminal may need to be continued.

If predicted categories included in the fifth prediction result and the T sixth prediction results are the same, and an absolute value of a difference between category scores is less than or equal to a threshold (for example, 0.2), it is considered that the prediction results are close to each other.

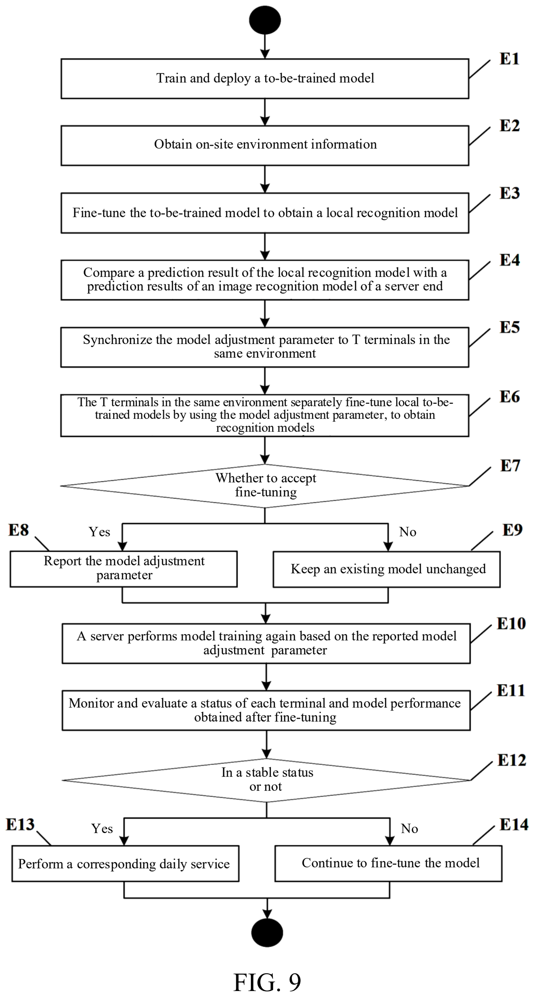

For ease of understanding, refer to 9. FIG. 9 is a schematic diagram of an overall procedure of a data processing method according to an embodiment of this application. As shown in the figure, specifically:

In operation E1, an on-site terminal trains and deploys a to-be-trained model.

In operation E2, the on-site terminal may obtain on-site environment information by using a camera, a light sensor, or the like.

In operation E3, the on-site terminal captures K images by using an image capturing apparatus, constructs a fine-tuning training set by using the K images, and fine-tunes the to-be-trained model based on the current on-site environment information, to obtain a local recognition model.

In operation E4, a prediction result of the local recognition model is compared with a prediction result of an image recognition model of a server end.

In operation E5, if the prediction result of the local recognition model is the same as or close to the prediction result of the image recognition model, the on-site terminal synchronizes a model adjustment parameter to T terminals in the same environment.

In operation E6, the T terminals in the same environment respectively fine-tune local to-be-trained models by using the model adjustment parameter, to obtain recognition models.

In operation E7, each of the T terminals votes according to a model performance change obtained after the fine-tuning, and calculates a comprehensive recognition score based on a voting status. Whether the T terminals accept the current fine-tuning is determined according to the comprehensive recognition score, and if yes, operation E8 is performed. If not, operation E9 is performed.

In operation E8, if the T terminals accept the current fine-tuning, the on-site terminal reports the model adjustment parameter to the server.

In operation E9, if the T terminals do not accept the current fine-tuning, the existing model is kept unchanged.

In operation E10, the server performs model training again according to the model adjustment parameter reported by the on-site terminal.

In operation E11, the server monitors and evaluates a status of each terminal and model performance obtained after fine-tuning.

In operation E12, the server determines whether the model is currently in a stable status, and if yes, operation E13 is performed, or if not, operation E14 is performed.

In operation E13, if the model is already in a stable status, the terminal and the server may perform a corresponding daily service.

In operation E14, if the model is not in a stable status, the terminal and the server continue to fine-tune the model.

Next, in this embodiment of this application, a manner of monitoring a model status based on a plurality of associated terminals is described. In the foregoing manner, the plurality of associated terminals may further monitor and evaluate statuses of various devices on site, to determine whether these devices have completed model fine-tuning, and determine whether the fine-tuned model is already stable. Based on this, normal operation of the system can be maintained according to a determining status. In addition, it is also convenient for the background to learn the status of the on-site terminal in real time, so as to help the background find and deal with an abnormality in time.

Based on the one or more embodiments corresponding to FIG. 3, in another exemplary embodiment provided in the embodiments of this application, after the determining the comprehensive recognition score according to the voting score corresponding to each terminal, the method may further include:

transmitting a model fine-tuning request to a terminal of the T terminals if the local recognition model does not satisfy the model fine-tuning condition, so that the terminal updates a model parameter of a to-be-trained model according to the model fine-tuning request, to obtain a recognition model, where the T terminals are associated with the on-site terminal, and T is an integer greater than or equal to 1;

receiving a model adjustment parameter transmitted by the terminal; and

updating the model parameter of the to-be-trained model of the on-site terminal by using the model adjustment parameter transmitted by the terminal.

In one or more embodiments, a training manner used when the model fine-tuning condition is not satisfied is described. As can be known from the foregoing embodiment, when the local recognition model does not satisfy the model fine-tuning condition, the on-site terminal may further randomly select a terminal from the T terminals, and send the model fine-tuning request to the terminal.

Assuming that the "terminal A" receives the model fine-tuning request, the "terminal A" may fine-tune the local to-be-trained model. Then, the "terminal A" sends, to another terminal on the same site, including the on-site terminal, a model adjustment parameter obtained after the fine-tuning. Based on this, the on-site terminal fine-tunes the to-be-trained model again by using the model adjustment parameter sent by the "terminal A". Alternatively, the on-site terminal continues to fine-tune the local recognition model also by using the model adjustment parameter sent by the "terminal A".

Next, in this embodiment of this application, a training manner used when the model fine-tuning condition is not satisfied is described. In the foregoing manner, if the local recognition model does not satisfy the model fine-tuning condition, another terminal may be selected from the terminals on the same site for fine-tuning processing, and based on a model adjustment parameter obtained after fine-tuning by the terminal, another terminal on the same site continues to perform fine-tuning. Therefore, the model can be continuously fine-tuned.

Based on one or more embodiments corresponding to FIG. 3, in another exemplary embodiment provided in this embodiment of this application, after the updating a model parameter of the to-be-trained model according to the K second prediction results and the fine-tuning training set, to obtain a local recognition model and a model adjustment parameter corresponding to the local recognition model, the method may further include:

photographing, in a case that the local recognition model satisfies the model fine-tuning condition, a to-be-recognized image by using the image capturing apparatus;

obtaining a seventh prediction result based on the to-be-recognized image by using the local recognition model, where the seventh prediction result includes a predicted category and a category score; and

determining, if the category score in the seventh prediction result is greater than or equal to a category score threshold, that the to-be-recognized image belongs to the predicted category in the seventh prediction result.

In one or more embodiments, a manner of recognizing an image locally on the terminal is described. As can be known from the foregoing embodiment, when the local recognition model satisfies the model fine-tuning condition, the on-site terminal may perform image recognition by using the local recognition model. The on-site terminal is used as an example for description below. In an actual application, another terminal may also perform image recognition in a similar manner. Details are not described herein again.

Specifically, the on-site terminal photographs several images by using an image capturing apparatus, and selects an image with high quality as the to-be-recognized image. Recognition of palmprint images is used as an example. Image quality evaluation, image enhancement, and precise palmprint area positioning are performed on several captured images. Exemplarily, a palmprint area may be extracted and positioned by using an image processing technology (for example, edge detection and threshold segmentation). In addition, an image with high definition and clear palmprint features is selected by using an image definition evaluation method (for example, a gradient method and a frequency-domain analysis method) for subsequent recognition processing.

After the to-be-recognized image is obtained, the to-be-recognized image is recognized by using the local recognition model, to obtain a seventh prediction result, where the seventh prediction result includes a predicted category and a category score. The predicted category is a category obtained through prediction, and the category score indicates a score of being predicted as the category. A higher category score indicates a higher probability that an image is predicted as the predicted category. Based on this, if the category score is greater than or equal to the category score threshold (for example, 0.90), the on-site terminal may determine that the to-be-recognized image belongs to the predicted category, and therefore, may perform a corresponding service (for example, a payment service or an access control service).

Exemplarily, in one case, the local recognition model may output category probability distribution corresponding to the to-be-recognized image. A category corresponding to a largest probability value in the category probability distribution is used as a predicted category of the to-be-recognized image, and the largest probability value is used as a category score. In another case, the local recognition model may extract an eigenvector of the to-be-recognized image, and then match the extracted eigenvector with an existing eigenvector in a database. For example, feature matching is performed by using a k-nearest neighbor (KNN) algorithm. Then, a category corresponding to an eigenvector having the highest similarity is used as the predicted category of the to-be-recognized image, and the highest similarity is used as the category score. Cosine similarity may be used for similarity between eigenvectors.

Next, in this embodiment of this application, a manner of recognizing an image locally on the terminal is provided. In the foregoing manner, the terminal may recognize the captured image by using the local recognition model. Therefore, on one hand, data processing pressure at the server end can be alleviated, and on the other hand, recognition efficiency can be improved without depending on a network environment.

Based on the one or more embodiments corresponding to FIG. 3, in another exemplary embodiment provided in the embodiments of this application, after the obtaining the seventh prediction result based on the to-be-recognized image by using the local recognition model, the method may further include:

transmitting the to-be-recognized image to the server if the category score in the seventh prediction result is less than the category score threshold, so that the server obtains an image recognition result based on the to-be-recognized image by using the image recognition model; and

receiving the image recognition result transmitted by the server.

In one or more embodiments, a manner of recognizing an image locally on the server is described. As can be known from the foregoing embodiment, after the terminal recognizes the to-be-recognized image by using the local recognition model, if the obtained category score is less than the category score threshold (for example, 0.90), the on-site terminal may send the to-be-recognized image to the server.

Specifically, after receiving the to-be-recognized image, the server may invoke the image recognition model to recognize the to-be-recognized image, to obtain the image recognition result. Then, the server sends the image recognition result to the on-site terminal. The image recognition result includes the predicted category and the category score of the to-be-recognized image. Based on this, the on-site terminal may perform a corresponding service (for example, a payment service or an access control service) according to the predicted category in the image recognition result.

Exemplarily, in one case, the image recognition model may output category probability distribution corresponding to the to-be-recognized image. A category corresponding to a largest probability value in the category probability distribution is used as a predicted category of the to-be-recognized image, and the largest probability value is used as a category score of the predicted category. In another case, the image recognition model may extract an eigenvector of the to-be-recognized image, and then match the extracted eigenvector with an existing eigenvector in a database. Then, a category corresponding to an eigenvector having the highest similarity is used as the predicted category of the to-be-recognized image, and the highest similarity is used as the category score of the predicted category.

Next, in this embodiment of this application, a manner of recognizing an image locally on the server is described. In the foregoing manner, if the terminal cannot locally predict a category of an image, the terminal may further request the server to predict the image. Because the model of the server end has a better recognition capability, a success rate and accuracy of image recognition can be improved.

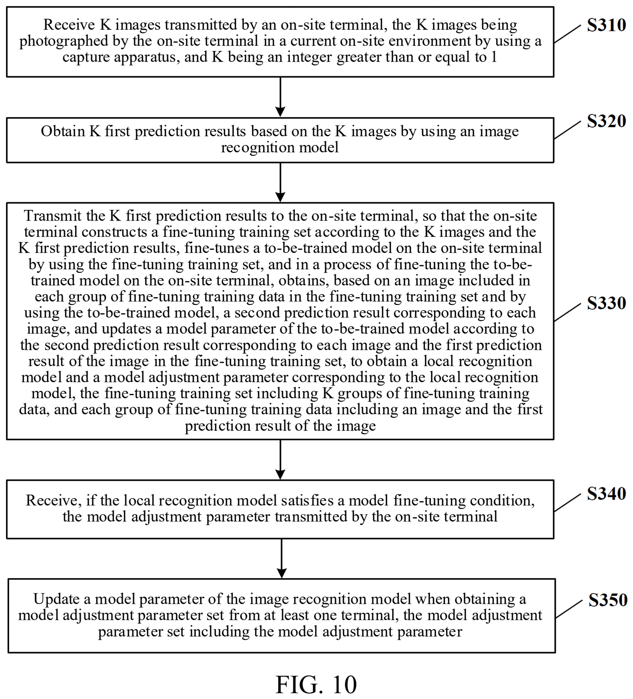

Based on the above description, a data processing method in this application is described from the perspective of a server. Refer to FIG. 10. The data processing method in the embodiments of this application can be independently performed by the server or performed by the server together with at least one terminal. The method of this application includes:

310: Receive K images transmitted by an on-site terminal, the K images being photographed by the on-site terminal in a current on-site environment by using a capture apparatus, and K being an integer greater than or equal to 1.

In one or more embodiments, the on-site terminal invokes the image capturing apparatus to photograph several images in the current on-site environment, to obtain the K images. The server receives the K images sent by the on-site terminal.

320: Obtain K first prediction results based on the K images by using an image recognition model.

In one or more embodiments, the server inputs each of the K images to the image recognition model, and outputs a first prediction result of each image by using the image recognition model, to obtain the K first prediction results.

Operation 320 in this embodiment is similar to operation 220 in the embodiment shown in FIG. 3, and details are not described herein again.

330: Transmit the K first prediction results to the on-site terminal, so that the on-site terminal constructs a fine-tuning training set according to the K images and the K first prediction results, fine-tunes a to-be-trained model on the on-site terminal by using the fine-tuning training set, and in a process of fine-tuning the to-be-trained model on the on-site terminal, obtains, based on an image included in each group of fine-tuning training data in the fine-tuning training set and by using the to-be-trained model, a second prediction result corresponding to each image, and updates a model parameter of the to-be-trained model according to the second prediction result corresponding to each image and the first prediction result of the image in the fine-tuning training set, to obtain a local recognition model and a model adjustment parameter corresponding to the local recognition model, the fine-tuning training set including K groups of fine-tuning training data, and each group of fine-tuning training data including an image and the first prediction result of the image.

In one or more embodiments, the server sends the K first prediction results to the on-site terminal. Based on this, the on-site terminal may perform model training by using the K images and the K first prediction results.

Operation 330 in this embodiment is similar to operations 230 to 250 in the embodiment shown in FIG. 3, and details are not described herein again.

340: Receive, if the local recognition model satisfies a model fine-tuning condition, the model adjustment parameter transmitted by the on-site terminal.

In one or more embodiments, if the local recognition model satisfies the model fine-tuning condition, the on-site terminal sends the model adjustment parameter to the server.

350: Update a model parameter of the image recognition model when obtaining a model adjustment parameter set from at least one terminal, the model adjustment parameter set including the model adjustment parameter.

In one or more embodiments, the server combines model adjustment parameters uploaded by different terminals, to obtain the model adjustment parameter set. Based on this, the server updates the model parameter of the image recognition model by using the model adjustment parameter set, that is, fine-tunes the image recognition model.

Operations 340 and 350 in this embodiment are similar to operation 260 in the embodiment shown in FIG. 3, and details are not described herein again.

An embodiment of this application provides a data processing method. In the foregoing manner, the terminal may fine-tune the local model based on the images captured in the on-site environment, and report a fine-tuned model adjustment parameter to the server. The server updates the image recognition model according to the model adjustment parameter set reported by terminals. Therefore, the image recognition model is applicable to various specific on-site environments to improve model recognition precision, and processing resources of the server are saved and model learning efficiency is improved.

Based on the one or more embodiments corresponding to FIG. 10, in another exemplary embodiment provided in the embodiments of this application, the updating a model parameter of the image recognition model when obtaining a model adjustment parameter set from at least one terminal may specifically include:

obtaining the model adjustment parameter set from the at least one terminal;

performing weighting processing on the model adjustment parameter set according to a comprehensive recognition score corresponding to each terminal, to obtain a weighted model adjustment parameter set; and

updating the model parameter of the image recognition model by using the weighted model adjustment parameter set.

In one or more embodiments, a manner of setting an impact weight based on a fine-tuning voting result is described. As can be known from the foregoing embodiment, the server receives model adjustment parameters sent by terminals on different sites, and then determines, based on the comprehensive recognition score corresponding to each terminal, whether to accept the model adjustment parameter transmitted by the terminal. A calculation manner of the comprehensive recognition score is described in the foregoing embodiment, and details are not described herein again. If accepting the model adjustment parameter, the server integrates the model adjustment parameter to the image recognition model for training.

In a possible implementation, the server opens an interface for receiving the model adjustment parameter and the voting score (or the comprehensive recognition score) sent by the terminal. If the server receives voting scores, the server further calculates the comprehensive recognition score. When the comprehensive recognition score is greater than or equal to a score threshold (for example, 0.5), it indicates that most terminals vote to approve. Therefore, the server also accepts the model adjustment parameter. When the comprehensive recognition score is less than the score threshold, it indicates that most terminals vote to oppose. Therefore, the server does not accept the model adjustment parameter. Further, if the server accepts the model adjustment parameter, the server may further weight the model adjustment parameter according to the comprehensive recognition score.

For example, it is assumed that a "terminal A" reports a group of model adjustment parameters, and a comprehensive recognition score "0.8" is calculated according to voting scores of several terminals associated with the "terminal A". A "terminal B" reports a group of model adjustment parameters, and a comprehensive recognition score "0.3" is calculated according to voting scores of several terminals associated with the "terminal B". A "terminal C" reports a group of model adjustment parameters, and a comprehensive recognition score "0.9" is calculated according to voting scores of several terminals associated with the "terminal C". Assuming that the score threshold is 0.5, the model adjustment parameter reported by the "terminal B" is not used. Impact of the model adjustment parameter reported by the "terminal A" on fine-tuning of the image recognition model is "0.8", and the model adjustment parameter is weighted by using "0.8", to obtain a weighted model adjustment parameter. Impact of the model adjustment parameter reported by the "terminal C" on fine-tuning of the image recognition model is "0.9", and the model adjustment parameter is weighted by using "0.9", to obtain a weighted model adjustment parameter. It can be learned that the model adjustment parameter reported by the "terminal C" has more impact on fine-tuning of the image recognition model.

Next, in this embodiment of this application, a manner of setting an impact weight based on a fine-tuning voting result is provided. In the foregoing manner, because sensing of an on-site environment may be different for each terminal, a fine-tuning result may also be different. Therefore, the server fine-tunes the image recognition model according to the comprehensive recognition scores and the model adjustment parameters reported by terminals from different environments. Therefore, the image recognition model of the server end can absorb different fine-tuning results, thereby improving a model recognition capability.

Based on the one or more embodiments corresponding to FIG. 10, in another exemplary embodiment provided in the embodiments of this application, the updating the model parameter of the image recognition model in the case that the model adjustment parameter set from the at least one terminal is obtained may specifically include:

updating the model parameter of the image recognition model when obtaining a model parameter set from the at least one terminal, where the model parameter set includes a model adjustment parameter, and the model adjustment parameter is a model parameter; or

updating the model parameter of the image recognition model in a case that a gradient set from the at least one terminal is obtained, where the gradient set includes the model adjustment parameter, and the model adjustment parameter is a gradient; or

updating the model parameter of the image recognition model in a case that an optimization algorithm parameter set from the at least one terminal is obtained, where the optimization algorithm parameter set includes the model adjustment parameter, and the model adjustment parameter is an optimization algorithm parameter.

In one or more embodiments, three manners of training the image recognition model based on the model adjustment parameter set are described. As can be known from the foregoing embodiment, the model adjustment parameter includes, but is not limited to, a model parameter, a gradient, and an optimization algorithm parameter. Based on this, the server may fine-tune the image recognition model according to the model adjustment parameter.

1. Based on a model parameter.

The model adjustment parameter set may be a model parameter set. That is, terminals from different environments may separately report model parameters to the server. Exemplarily, the server may aggregate the model parameters by using a model aggregating policy, and fine-tune the image recognition model by using the aggregated model parameters.

The model aggregating policy includes, but is not limited to, a stacking policy, a boosting policy, bootstrap aggregating (Bagging), and the like.

2. Based on a gradient.

The model adjustment parameter set may be a gradient set. That is, terminals from different environments may separately report gradients to the server. Exemplarily, the server may average the gradients to obtain an average gradient. Based on this, the server may fine-tune the image recognition model by using the average gradient.

3. Based on an optimization algorithm parameter.

The model adjustment parameter set may be an optimization algorithm parameter set. The optimization algorithm parameter includes, but is not limited to, an optimization algorithm, a learning rate, and a quantity of iterations. Terminals from different environments may separately report optimization algorithm parameters to the server. Exemplarily, the server may summarize the optimization algorithm parameters, and fine-tune the image recognition model by using an optimization algorithm parameter having the highest occurrence frequency.

According to fine-tuning manners reported by the terminal, the server may further select one of the fine-tuning manners for training. For example, if a fine-tuning manner is modifying a model parameter, an updated model parameter may be directly used for training. For another example, if a fine-tuning manner is modifying an optimization algorithm parameter, the optimization algorithm parameter may be used when a large model is trained.

Next, in this embodiment of this application, a manner of training the image recognition model based on the model adjustment parameter set is provided. In the foregoing manner, terminals from different environments may separately report the model adjustment parameters to the server, and the server fine-tunes the image recognition model based on specific content of the model adjustment parameters. Therefore, flexibility and diversity of model training manners are improved.

Based on the one or more embodiments corresponding to FIG. 10, in another exemplary embodiment provided in the embodiments of this application, after the updating the model parameter of the image recognition model in the case that the model adjustment parameter set from the at least one terminal is obtained, the method may further include: transmitting the model adjustment parameter of the image recognition model to the at least one terminal, so that each of the at least one terminal updates a model parameter of a recognition model by using the model adjustment parameter of the image recognition model.

In one or more embodiments, a manner of updating another recognition model based on the image recognition model is described. As can be known from the foregoing embodiment, the server may send the model adjustment parameter of the image recognition model to terminals in different environments, so that these terminals may fine-tune the recognition models by using the model adjustment parameter. For a fine-tuning manner based on the model adjustment parameter, refer to the foregoing embodiment, and details are not described herein again.

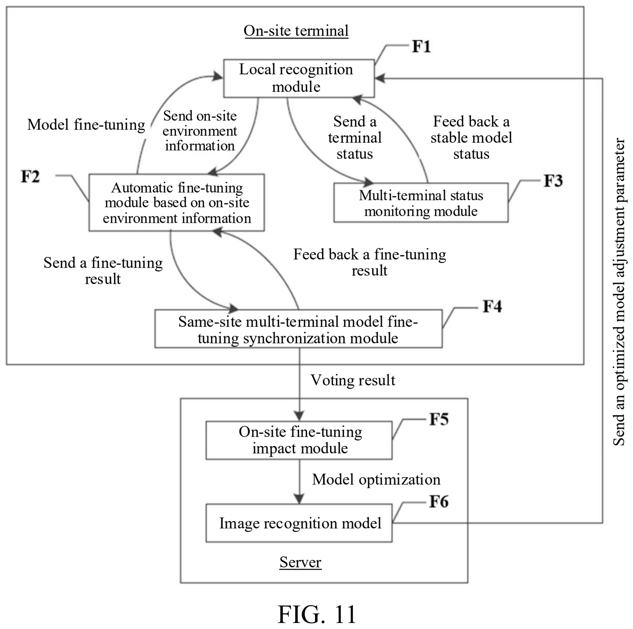

For ease of understanding, refer to FIG. 11. FIG. 11 is a schematic diagram of a framework for data processing between a terminal and a server according to an embodiment of this application. As shown in the figure, using an on-site terminal as an example, the on-site terminal includes a local recognition module indicated by F1, an automatic fine-tuning module based on on-site environment information indicated by F2, a multi-terminal status monitoring module indicated by F3, and a same-site multi-terminal model fine-tuning synchronization module indicated by F4. The server includes an on-site fine-tuning impact module indicated by F5 and an image recognition model indicated by F6.

During model fine-tuning, the local recognition module may send on-site environment information to the automatic fine-tuning module based on on-site environment information, and the automatic fine-tuning module based on on-site environment information fine-tunes a local to-be-trained model according to the on-site environment information and a fine-tuning training set.

In a status monitoring process, the local recognition module may further send a terminal statuses of the on-site terminal to the multi-terminal status monitoring module, and the multi-terminal status monitoring module feeds back a stable model status to the local recognition module.

In a process in which a plurality of terminals synchronize a fine-tuning result, the automatic fine-tuning module based on on-site environment information sends a model adjustment parameter to the same-site multi-terminal model fine-tuning synchronization module, so that another terminal may fine-tune a local to-be-trained model by using the model adjustment parameter, and feed back a corresponding fine-tuning result.

In a process in which the server synchronizes a fine-tuning result, the same-site multi-terminal model fine-tuning synchronization module feeds back voting results of the terminals to the on-site fine-tuning impact module of the server, and the on-site fine-tuning impact module obtains a comprehensive recognition score according to the voting results. If the server determines, according to the comprehensive recognition score, to accept the model adjustment parameter reported by the on-site terminal, the server may fine-tune the image recognition model by using the model adjustment parameter, and then deliver, to the on-site terminal, a model adjustment parameter obtained after the image recognition model is fine-tuned.

Next, in this embodiment of this application, a manner of updating another recognition model based on the image recognition model is provided. In the foregoing manner, the server may further deliver, to each terminal, the model adjustment parameter obtained after fine-tuning, so that the terminal fine-tunes a local model based on the model adjustment parameter. This achieves an effect of continuous model learning and optimization, and improves image recognition precision and efficiency as a whole.

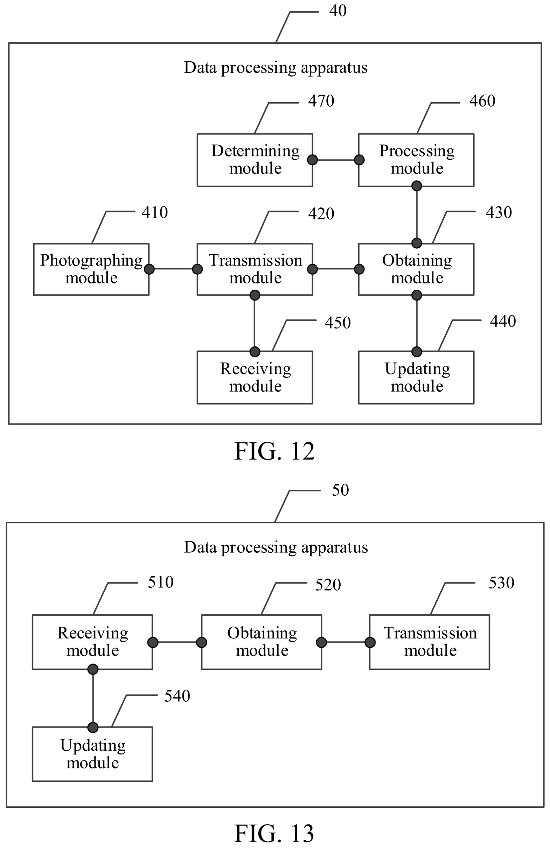

A data processing apparatus in this application is described below in detail. Referring to FIG. 12, FIG. 12 is a schematic diagram of an embodiment of a data processing apparatus according to an embodiment of this application. A data processing apparatus 40 includes:

a photographing module 410, configured to photograph K images in a current on-site environment by using an image capturing apparatus, K being an integer greater than or equal to 1;

a transmission module 420, configured to transmit the K images to a server, so that the server obtains K first prediction results based on the K images by using an image recognition model;

an obtaining module 430, configured to construct a fine-tuning training set according to the K images and the K first prediction results transmitted by the server, the fine-tuning training set including K groups of fine-tuning training data, and each group of fine-tuning training data including an image and a first prediction result of the image; and

an updating module 440, configured to fine-tune a to-be-trained model on the on-site terminal by using the fine-tuning training set, and in a process of fine-tuning the to-be-trained model on the on-site terminal, obtain, based on an image included in each group of fine-tuning training data in the fine-tuning training set and by using the to-be-trained model, a second prediction result corresponding to each image, and update a model parameter of the to-be-trained model according to the second prediction result corresponding to each image and the first prediction result of the image in the fine-tuning training set, to obtain a local recognition model and a model adjustment parameter corresponding to the local recognition model;

the transmission module 420 being further configured to transmit the model adjustment parameter to a server if the local recognition model satisfies a model fine-tuning condition, so that the server updates a model parameter of an image recognition model according to a model adjustment parameter set from at least one terminal, the model adjustment parameter set including the model adjustment parameter.

Based on the embodiment corresponding to FIG. 12, in another embodiment of the data processing apparatus 40 provided in this embodiment of this application, the data processing apparatus 40 further includes a receiving module 450.

The transmission module 420 is further configured to transmit a model training request to the server, so that the server determines, according to the model training request, a training data set applied to the on-site terminal.

The receiving module 450 is configured to receive an initial training set transmitted by the server, where the initial training set includes M groups of initial training data, and each group of initial training data includes an image and an annotation result of the image.

The obtaining module 430 is further configured to obtain M initial prediction results based on M images included in the initial training set and by using an initial recognition model, where each initial prediction result includes a predicted category and a category score of an image.

The updating module 440 is further configured to update a model parameter of the initial recognition model according to the M initial prediction results and M annotation results included in the initial training set, to obtain the to-be-trained model.

Based on the embodiment corresponding to FIG. 12, in another embodiment of the data processing apparatus 40 provided in this embodiment of this application, the data processing apparatus 40 further includes a processing module 460.

The obtaining module 430 is further configured to: before the K images are photographed by using the image capturing apparatus, obtain on-site environment information of the on-site terminal, where the on-site environment information includes at least one of light intensity and background noise.

The processing module 460 is configured to adjust a first application parameter of the image capturing apparatus in response to a first adjustment operation on the image capturing apparatus if the light intensity included in the on-site environment information does not fall within a light intensity interval, where the first application parameter includes at least one of a shutter speed, a light sensitivity parameter, and an exposure compensation parameter.

The processing module 460 is further configured to adjust a second application parameter of the image capturing apparatus in response to a second adjustment operation on the image capturing apparatus if the background noise included in the on-site environment information is greater than or equal to a background noise threshold, where the second application parameter includes at least one of an acutance parameter, a light sensitivity parameter, and a denoising parameter.

Based on the embodiment corresponding to FIG. 12, in another embodiment of the data processing apparatus 40 provided in this embodiment of this application, the data processing apparatus 40 further includes a determining module 470.

The processing module 460 is further configured to obtain recognition accuracy of the local recognition model for N images, where N is an integer greater than or equal to 1, and the N images are photographed by the image capturing apparatus.

The determining module 470 is further configured to determine that the local recognition model satisfies the model fine-tuning condition if the recognition accuracy is greater than or equal to an accuracy threshold; or the transmission module 420 is further configured to transmit the model adjustment parameter to T terminals if the recognition accuracy is greater than or equal to an accuracy threshold, so that the T terminals respectively update, according to the model adjustment parameter, model parameters of corresponding to-be-trained models, to obtain T recognition models, where the T terminals are associated with the on-site terminal, and T is an integer greater than or equal to 1. The obtaining module 430 is further configured to obtain a voting score corresponding to each of the T terminals, where the voting score is determined according to a prediction result of a recognition model and a prediction result of the image recognition model. The determining module 470 is further configured to determine a comprehensive recognition score according to the voting score corresponding to each terminal. The determining module 470 is further configured to determine, if the comprehensive recognition score is greater than or equal to a recognition score threshold, that the local recognition model satisfies the model fine-tuning condition.

Based on the embodiment corresponding to FIG. 12, in another embodiment of the data processing apparatus 40 provided in this embodiment of this application:

The transmission module 420 is further configured to transmit the N images photographed by the image capturing apparatus to the server, so that the server obtains N third prediction results based on the N images by using the image recognition model.

The receiving module 450 is further configured to receive the N third prediction results transmitted by the server.

The obtaining module 430 is further configured to obtain N fourth prediction results based on the N images by using the local recognition model.

The processing module 460 is further configured to perform verification on the N fourth prediction results according to the N third prediction results, to obtain the recognition accuracy for the N images.

Based on the embodiment corresponding to FIG. 12, in another embodiment of the data processing apparatus 40 provided in this embodiment of this application:

The determining module 470 is specifically configured to sum up voting scores of the T terminals, to obtain a total voting score; and

obtain the comprehensive recognition score according to a ratio of the total voting score to the value T.

Based on the embodiment corresponding to FIG. 12, in another embodiment of the data processing apparatus 40 provided in this embodiment of this application:

The determining module 470 is specifically configured to obtain a weight parameter set corresponding to each of the T terminals, where the weight parameter set includes at least one of a device weight, an environment weight, and a preference weight;

weight, for each of the T terminals, the voting score of the terminal by using the weight parameter set of the terminal, to obtain a weighted voting score of the terminal; and

determine the comprehensive recognition score according to the weighted voting score corresponding to each of the T terminals.

Based on the embodiment corresponding to FIG. 12, in another embodiment of the data processing apparatus 40 provided in this embodiment of this application:

The determining module 470 is further configured to: before the model adjustment parameter is sent to the T terminals, determine, if the on-site terminal and at least one terminal are located in the same location, that the at least one terminal is associated with the on-site terminal, and determine the at least one terminal as the T terminals; or

the determining module 470 is further configured to: before the model adjustment parameter is sent to the T terminals, determine, if the same binding object is set for the on-site terminal and at least one terminal, that the at least one terminal is associated with the on-site terminal, and determine the at least one terminal as the T terminals; or

the determining module 470 is further configured to: before the model adjustment parameter is sent to the T terminals, determine, if the on-site terminal and at least one terminal are connected to the same access point, that the at least one terminal is associated with the on-site terminal, and determine the at least one terminal as the T terminals.

Based on the embodiment corresponding to FIG. 12, in another embodiment of the data processing apparatus 40 provided in this embodiment of this application:

The obtaining module 430 is further configured to obtain a to-be-tested image after it is determined that the local recognition model satisfies the model fine-tuning condition.

The obtaining module 430 is further configured to obtain a fifth prediction result based on the to-be-tested image by using the local recognition model.

The obtaining module 430 is further configured to obtain T sixth prediction results from the T terminals, where each sixth prediction result is obtained by the terminal based on the to-be-tested image by using the recognition model.

The processing module 460 is further configured to perform, if it is determined that the local recognition model is already in a model stable state according to the fifth prediction result and the T sixth prediction results, a corresponding service by using the local recognition model.

Based on the embodiment corresponding to FIG. 12, in another embodiment of the data processing apparatus 40 provided in this embodiment of this application:

The transmission module 420 is further configured to: after the comprehensive recognition score is determined according to the voting score corresponding to each terminal, send a model fine-tuning request to a terminal of the T terminals if the local recognition model does not satisfy the model fine-tuning condition, so that the terminal updates a model parameter of a to-be-trained model according to the model fine-tuning request, to obtain a recognition model, where the T terminals are associated with the on-site terminal, and T is an integer greater than or equal to 1.

The receiving module 450 is further configured to receive the model adjustment parameter transmitted by the terminal.

The updating module 440 is further configured to update the model parameter of the to-be-trained model of the on-site terminal by using the model adjustment parameter transmitted by the terminal.

Based on the embodiment corresponding to FIG. 12, in another embodiment of the data processing apparatus 40 provided in this embodiment of this application:

The photographing module 410 is further configured to: after the model parameter of the to-be-trained model is updated according to the K second prediction results and the fine-tuning training set, to obtain the local recognition model and the model adjustment parameter corresponding to the local recognition model, photograph, in a case that the local recognition model satisfies the model fine-tuning condition, a to-be-recognized image by using the image capturing apparatus.

The obtaining module 430 is further configured to obtain a seventh prediction result based on the to-be-recognized image by using the local recognition model, where the seventh prediction result includes a predicted category and a category score.

The determining module 470 is further configured to determine, if the category score in the seventh prediction result is greater than or equal to a category score threshold, that the to-be-recognized image belongs to the predicted category in the seventh prediction result.

Based on the embodiment corresponding to FIG. 12, in another embodiment of the data processing apparatus 40 provided in this embodiment of this application:

The transmission module 420 is further configured to: after the seventh prediction result is obtained based on the to-be-recognized image by using the local recognition model, send the to-be-recognized image to the server if the category score in the seventh prediction result is less than the category score threshold, so that the server obtains an image recognition result based on the to-be-recognized image by using the image recognition model.

The receiving module 450 is further configured to receive the image recognition result transmitted by the server.

A data processing apparatus in this application is described below in detail. Referring to FIG. 13, FIG. 13 is a schematic diagram of an embodiment of a data processing apparatus according to an embodiment of this application. A data processing apparatus 50 includes:

a receiving module 510, configured to receive K images transmitted by an on-site terminal, the K images being photographed by the on-site terminal in a current on-site environment by using a capture apparatus, and K being an integer greater than or equal to 1;

an obtaining module 520, configured to obtain K first prediction results based on the K images by using an image recognition model;

a transmission module 530, configured to transmit the K first prediction results to the on-site terminal, so that the on-site terminal constructs a fine-tuning training set according to the K images and the K first prediction results, fine-tunes a to-be-trained model on the on-site terminal by using the fine-tuning training set, and in a process of fine-tuning the to-be-trained model on the on-site terminal, obtains, based on an image included in each group of fine-tuning training data in the fine-tuning training set and by using the to-be-trained model, a second prediction result corresponding to each image, and updates a model parameter of the to-be-trained model according to the second prediction result corresponding to each image and the first prediction result of the image in the fine-tuning training set, to obtain a local recognition model and a model adjustment parameter corresponding to the local recognition model, the fine-tuning training set including K groups of fine-tuning training data, and each group of fine-tuning training data including an image and the first prediction result of the image;

the receiving module 510 being further configured to receive, if the local recognition model satisfies a model fine-tuning condition, the model adjustment parameter transmitted by the on-site terminal; and

an updating module 540, configured to update a model parameter of the image recognition model in a case that a model adjustment parameter set from at least one terminal is obtained, the model adjustment parameter set including the model adjustment parameter.

Based on the embodiment corresponding to FIG. 13, in another embodiment of the data processing apparatus 50 provided in this embodiment of this application:

The updating module 540 is specifically configured to obtain the model adjustment parameter set from the at least one terminal;

perform weighting processing on the model adjustment parameter set according to a comprehensive recognition score corresponding to each terminal, to obtain a weighted model adjustment parameter set; and

update the model parameter of the image recognition model by using the weighted model adjustment parameter set.

Based on the embodiment corresponding to FIG. 13, in another embodiment of the data processing apparatus 50 provided in this embodiment of this application:

The updating module 540 is specifically configured to update the model parameter of the image recognition model in a case that a model parameter set from the at least one terminal is obtained, where the model parameter set includes the model adjustment parameter, and the model adjustment parameter is a model parameter; or

update the model parameter of the image recognition model in a case that a gradient set from the at least one terminal is obtained, where the gradient set includes the model adjustment parameter, and the model adjustment parameter is a gradient; or

update the model parameter of the image recognition model in a case that an optimization algorithm parameter set from the at least one terminal is obtained, where the optimization algorithm parameter set includes the model adjustment parameter, and the model adjustment parameter is an optimization algorithm parameter.

Based on the embodiment corresponding to FIG. 13, in another embodiment of the data processing apparatus 50 provided in this embodiment of this application:

The transmission module 530 is further configured to: after the model parameter of the image recognition model is updated in the case that the model adjustment parameter set from the at least one terminal is obtained, send the model adjustment parameter of the image recognition model to the at least one terminal, so that each of the at least one terminal updates a model parameter of a recognition model by using the model adjustment parameter of the image recognition model.

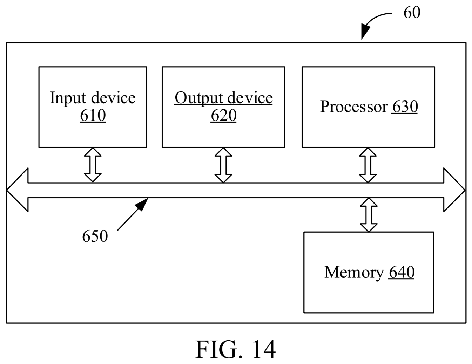

FIG. 14 is a schematic structural diagram of a computer device 60 according to an embodiment of this application. The computer device 60 may include an input device 610, an output device 620, a processor 630, and a memory 640. The output device 620 in this embodiment of this application may be a display device.

The memory 640 may include a read-only memory and a random access memory, and provides an instruction and data to the processor 630. A part of the memory 640 may further include a non-volatile random access memory (NVRAM).

The memory 640 stores the following elements: executable modules or data structures, a subset thereof, or an extended set thereof:

operation instructions: including operation instructions, to implement an operation; and

an operating system: including a system program, to implement basic services and process hardware-based tasks.

The processor 630 controls the computer device 60 to perform operations. The processor 630 may also be referred to as a central processing unit (CPU).

In a specific application, various components of the computer device 60 are coupled to each other by using a bus system 650. In addition to including a data bus, the bus system 650 may further include a power bus, a control bus, and a status signal bus. However, for ease of clear description, all types of buses in the figure are marked as the bus system 650.

The method provided in the embodiments of this application may be applied to the processor 630 or implemented by the processor 630. The processor 630 may be an integrated circuit chip having a capability of processing a signal. In an implementation process, the operations of the foregoing methods may be implemented by using an integrated logic circuit in a form of hardware in the processor 630, or by using instructions in a form of software. The processor 630 may be a general-purpose processor, a digital signal processor (DSP), an application specific integrated circuit (ASIC), a field-programmable gate array (FPGA), another programmable logic device, a discrete gate, a transistor logic device, or a discrete hardware component. The processor may implement or perform the methods, operations, and logical block diagrams disclosed in the embodiments of this application. The general-purpose processor may be a microprocessor, or may be any conventional processor or the like. The operations of the methods disclosed with reference to the embodiments of this application may be directly performed by hardware in the processor, or may be performed by a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory 640, and the processor 630 reads information in the memory 640, and completes the operations in the foregoing methods in combination with hardware thereof.

The operations performed by the terminal or the server in the foregoing embodiments may be based on the computer device structure shown in FIG. 14.

An embodiment of this application further provides a computer-readable storage medium, having a computer program stored therein, the computer program, when executed by a processor, implementing the operations of the method described in the foregoing embodiments.

An embodiment of this application further provides a computer program product, including a computer program, the computer program, when executed by a processor, implementing the operations of the method described in the foregoing embodiments.

In a specific implementation of this application, related data such as palmprint information, iris information, and face information is involved. When the foregoing embodiments of this application are applied to a specific product or technology, a permission or consent of a user is required, and collection, use, and processing of the related data need to comply with relevant laws, regulations, and standards of relevant countries and regions.

A person skilled in the art can clearly understand that for convenience and conciseness of description, for specific working processes of the foregoing systems, devices and units, refer to the corresponding processes in the foregoing method embodiments, and details are not described herein again.

In the several embodiments provided in this application, the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or some of the technical solutions may be implemented in the form of a software product. The computer software product is stored in a storage medium and includes several instructions for instructing a computer device (which may be a server, a terminal device, or the like) to perform all or some of the operations of the methods described in the embodiments of this application. The storage medium includes: various mediums that may store a computer program, such as a USB flash disk, a mobile hard disk, a read-only memory (ROM), a random access memory (RAM), a magnetic disk, or an optical disk.

Based on the above, the foregoing embodiments are merely intended to describe the technical solutions of this application, and are not intended to limit this application. Although this application is described in detail with reference to the foregoing embodiments, a person skilled in the art understands that, modifications may still be made to the technical solutions described in the foregoing embodiments, or equivalent replacements may be made to the part of the technical features; as long as such modifications or replacements do not cause the essence of corresponding technical solutions to depart from the spirit and scope of the technical solutions of the embodiments of this application.

**Claims**

1. A data processing method, performed by a terminal, comprising:

    obtaining K reference images through photographing in an environment where the terminal is currently located, K being an integer greater than or equal to 1;
    transmitting the K reference images to a server, and receiving, from the server, K first prediction results generated based on the K reference images by using an image recognition model;
    constructing a fine-tuning training set according to the K reference images and the K first prediction results, the fine-tuning training set comprising K groups of fine-tuning training data, and each group of fine-tuning training data comprising one of the K reference images and one of the K first prediction result corresponding to the reference image;
    fine-tuning a to-be-trained model on the terminal by using the fine-tuning training set through: obtaining, for a reference image comprised in each group of fine-tuning training data in the fine-tuning training set and by using the to-be-trained model, a second prediction result corresponding to the reference image, and updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model; and
    transmitting the model adjustment parameter to the server in response to the fine-tuned recognition model satisfying a model fine-tuning condition, to enable the server to update a model parameter of the image recognition model according to a model adjustment parameter set, the model adjustment parameter set comprising the model adjustment parameter.

2. The method according to claim 1, further comprising:

    transmitting a model training request to the server;
    receiving an initial training set transmitted from the server, wherein the initial training set is determined by the server according to the model training request, and comprises M groups of initial training data, and each group of initial training data comprises a training image and an annotation result of the training image;
    obtaining M initial prediction results based on M training images comprised in the initial training set and by using an initial recognition model, wherein each initial prediction result comprises a predicted category and a category score of a training image; and
    updating a model parameter of the initial recognition model according to the M initial prediction results and M annotation results comprised in the initial training set, to obtain the to-be-trained model.

3. The method according to claim 1, before the obtaining K reference images in an environment where the terminal is currently located , further comprising:

    obtaining environment information of the environment, wherein the environment information comprises at least one of light intensity and background noise;
    if the environment information comprises the light intensity and the light intensity does not fall within a light intensity range, adjusting a first application parameter of an image capturing apparatus for performing the photographing in response to a first adjustment operation being performed on the image capturing apparatus, wherein the first application parameter comprises at least one of a shutter speed, a light sensitivity parameter, and an exposure compensation parameter; and

if the environment information comprises the background noise and the background noise is greater than or equal to a background noise threshold, adjusting a second application parameter of the image capturing apparatus in response to a second adjustment operation being performed on the image capturing apparatus, wherein the second application parameter comprises at least one of an acutance parameter, the light sensitivity parameter, and a denoising parameter.

4. The method according to claim 1, after the updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model, further comprising:
obtaining recognition accuracy of the fine-tuned recognition model for N new images, wherein N is an integer greater than or equal to 1, and the N new images are obtained by photographing through the image capturing apparatus; and

determining that the fine-tuned recognition model satisfies the model fine-tuning condition if the recognition accuracy is greater than or equal to an accuracy threshold; or
transmitting the model adjustment parameter to T reference terminals if the recognition accuracy is greater than or equal to the accuracy threshold, so that each of the T reference terminals updates, according to the model adjustment parameter, a model parameter of a corresponding to-be-trained model on the reference terminal, to obtain T updated recognition models, wherein the T reference terminals are associated with the terminal, and T is an integer greater than or equal to 1; obtaining a voting score of each of the T reference terminals, wherein the voting score of a reference terminal is determined according to a prediction result of an updated recognition model on the reference terminal and a prediction result of the image recognition model for a same image; determining a comprehensive recognition score according to the voting score of each reference terminal; and determining, if the comprehensive recognition score is greater than or equal to a recognition score threshold, that the fine-tuned recognition model satisfies the model fine-tuning condition.

5. The method according to claim 4, wherein the obtaining recognition accuracy of the fine-tuned recognition model for N new images comprises:

transmitting the N new images obtained by photographing through the image capturing apparatus to the server;
receiving N third prediction results transmitted from the server, wherein the N third prediction results are generated based on the N new images by using the image recognition model;
obtaining N fourth prediction results based on the N new images by using the fine-tuned recognition model; and
performing verification on the N fourth prediction results according to the N third prediction results, to obtain the recognition accuracy for the N new images.

6. The method according to claim 4, wherein the determining a comprehensive recognition score according to the voting score of each reference terminal comprises:

summing up voting scores of the T reference terminals, to obtain a total voting score; and
obtaining the comprehensive recognition score according to a ratio of the total voting score to the value T.

7. The method according to claim 4, wherein the determining a comprehensive recognition score according to the voting score of each reference terminal comprises:

obtaining a weight parameter set of each of the T reference terminals, wherein the weight parameter set comprises at least one of a device weight, an environment weight, and a preference weight;
weighting, for each of the T reference terminals, the voting score of the reference terminal by using the weight parameter set of the reference terminal, to obtain a weighted voting score of the reference terminal; and
determining the comprehensive recognition score according to the weighted voting score of each of the T reference terminals.

8. The method according to claim 4, before the transmitting the model adjustment parameter to T reference terminals, further comprising:

determining, if the terminal and at least one to-be-determined terminal are located in the same region, that the at least one to-be-determined terminal is associated with the terminal, and determining each of the at least one to-be-determined terminal as one of the T reference terminals; or

determining, if the same binding object is bound to the terminal and at least one to-be-determined terminal, that the at least one to-be-determined terminal is associated with the terminal, and determining each of the at least one to-be-determined terminal as one of the T reference terminals; or

determining, if the terminal and at least one to-be-determined terminal are connected to the same access point, that the at least one to-be-determined terminal is associated with the terminal, and determining each of the at least one to-be-determined terminal as one of the T reference terminals.

9. The method according to claim 4, after the determining that the fine-tuned recognition model satisfies the model fine-tuning condition, further comprising:

obtaining a to-be-tested image;

obtaining a fifth prediction result based on the to-be-tested image by using the fine-tuned recognition model;

obtaining T sixth prediction results from the T reference terminals, wherein each sixth prediction result is obtained by a reference terminal based on the to-be-tested image by using an updated recognition model on the reference terminal; and

performing, if determining that the fine-tuned recognition model has been in a model stable state according to the fifth prediction result and the T sixth prediction results, a preset service by using the fine-tuned recognition model.

10. The method according to claim 1, further comprising:

transmitting a model fine-tuning request to a reference terminal of T reference terminals if the fine-tuned recognition model does not satisfy the model fine-tuning condition, wherein the T terminals are associated with the terminal, and T is an integer greater than or equal to 1;

receiving a model adjustment parameter transmitted from the reference terminal, wherein the transmitted model adjustment parameter is for an updated recognition model obtained by the reference terminal through updating a model parameter of a to-be-trained model on the reference terminal according to the model fine-tuning request; and

updating the model parameter of the to-be-trained model of the terminal by using the model adjustment parameter transmitted from the reference terminal.

11. The method according to any one of claims 1 to 10, after the updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model, further comprising:

obtaining, in a case that the fine-tuned recognition model satisfies the model fine-tuning condition, a to-be-recognized image by photographing through the image capturing apparatus;

obtaining a seventh prediction result based on the to-be-recognized image by using the fine-tuned recognition model, wherein the seventh prediction result comprises a predicted category and a category score; and

determining, if the category score is greater than or equal to a category score threshold, that the to-be-recognized image belongs to the predicted category.

12. The method according to claim 11, after the obtaining a seventh prediction result based on the to-be-recognized image by using the fine-tuned recognition model, further comprising:

transmitting the to-be-recognized image to the server if the category score is less than the category score threshold; and

receiving an image recognition result transmitted from the server, wherein the image recognition result is generated by the server based on the to-be-recognized image by using the image recognition model.

13. A data processing method, performed by a server, comprising:

receiving K reference images transmitted by a terminal, the K images being obtained through photographing by the terminal in an environment where the terminal is currently located, and K being an integer greater than or equal to 1;

obtaining K first prediction results based on the K reference images by using an image recognition model;

transmitting the K first prediction results to the terminal, to enable the terminal to construct a fine-tuning training set according to the K reference images and the K first prediction results, fine-tune a to-be-trained model on the terminal by using the fine-tuning training set through: obtaining, for a reference image comprised in each group of fine-tuning training data in the fine-tuning training set and by using the to-be-trained model, a second prediction result corresponding to the reference image, and updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model, each group of fine-tuning training data comprising one of the K reference images and one of the K first prediction result corresponding to the reference image;

receiving, if the fine-tuned recognition model satisfies a model fine-tuning condition, the model adjustment parameter from the terminal; and

updating a model parameter of the image recognition model when obtaining a model adjustment parameter set, the model adjustment parameter set comprising the model adjustment parameter.

14. The method according to claim 13, wherein the model adjustment parameter set comprises at least one model adjustment parameter from at least one associated terminal, and the updating a model parameter of the image recognition model when obtaining a model adjustment parameter set comprises:

receiving the at least one model adjustment parameter comprised in the model adjustment parameter set from the at least one associated terminal;

performing weighting processing on the at least one model adjustment parameter according to a comprehensive recognition score corresponding to each associated terminal, to obtain a weighted model adjustment parameter set; and

updating the model parameter of the image recognition model by using the weighted model adjustment parameter set.

15. The method according to claim 13, wherein the updating a model parameter of the image recognition model when obtaining a model adjustment parameter set comprises:

updating the model parameter of the image recognition model when obtaining a model parameter set, wherein the model parameter set comprises the model adjustment parameter, and the model adjustment parameter is a model parameter;

or

updating the model parameter of the image recognition model when obtaining a gradient set, wherein the gradient set comprises the model adjustment parameter, and the model adjustment parameter is a gradient;

or

updating the model parameter of the image recognition model when obtaining an optimization algorithm parameter set, wherein the optimization algorithm parameter set comprises the model adjustment parameter, and the model adjustment parameter is an optimization algorithm parameter.

16. The method according to any one of claims 13 to 15, after the updating a model parameter of the image recognition model when obtaining a model adjustment parameter set, further comprising:
transmitting the model adjustment parameter of the image recognition model to at least one terminal, to enable each associated terminal to update a model parameter of a local recognition model on the associated terminal by using the model adjustment parameter of the image recognition model.

17. A data processing apparatus, deployed on a terminal, comprising:

a photographing module, configured to obtain K reference images through photographing in an environment where the terminal is currently located, K being an integer greater than or equal to 1;

a transmission module, configured to transmit the K reference images to a server, and receiving, from the server, K first prediction results generated based on the K reference images by using an image recognition model;

an obtaining module, configured to construct a fine-tuning training set according to the K reference images and the K first prediction results, the fine-tuning training set comprising K groups of fine-tuning training data, and each group of fine-tuning training data comprising one of the K reference images and one of the K first prediction result corresponding to the reference image; and

an updating module, configured to fine-tune a to-be-trained model on the terminal by using the fine-tuning training set through: obtaining, for a reference image comprised in each group of fine-tuning training data in the fine-tuning training set and by using the to-be-trained model, a second prediction result corresponding to the reference image, and updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model;

the transmission module being further configured to transmit the model adjustment parameter to the server in response to the fine-tuned recognition model satisfying a model fine-tuning condition, to enable the server to update a model parameter of the image recognition model according to a model adjustment parameter set, the model adjustment parameter set comprising the model adjustment parameter.

18. A data processing apparatus, deployed on a server, comprising:

a receiving module, configured to receive K reference images transmitted by a terminal, the K images being obtained through photographing by the terminal in an environment where the terminal is currently located, and K being an integer greater than or equal to 1;

an obtaining module, configured to obtain K first prediction results based on the K reference images by using an image recognition model;

a transmission module, configured to transmit the K first prediction results to the terminal, to enable the terminal to construct a fine-tuning training set according to the K reference images and the K first prediction results, fine-tune a to-be-trained model on the terminal by using the fine-tuning training set through: obtaining, for a reference image comprised in each group of fine-tuning training data in the fine-tuning training set and by using the to-be-trained model, a second prediction result corresponding to the reference image, and updating a model parameter of the to-be-trained model according to the second prediction result corresponding to each reference image and the first prediction result of the reference image in the fine-tuning training set, to obtain a fine-tuned recognition model and a model adjustment parameter corresponding to the fine-tuned recognition model, each group of fine-tuning training data comprising one of the K reference images and one of the K first prediction result corresponding to the reference image;

the receiving module being further configured to receive, if the fine-tuned recognition model satisfies a model fine-tuning condition, the model adjustment parameter from the terminal; and

an updating module, configured to update a model parameter of the image recognition model when obtaining a model adjustment parameter set, the model adjustment parameter set comprising the model adjustment parameter.

19. A computer device, comprising a memory and a processor, the memory having a computer program stored therein, the processor, when executing the computer program, implementing the operations of the method according to any one of claims 1 to 12 or the operations of the method according to any one of claims 13 to 16.

20. A computer-readable storage medium, having a computer program stored therein, the computer program, when executed by a processor, implementing the operations of the method according to any one of claims 1 to 12 or the operations of the method according to any one of claims 13 to 16.

21. A computer program product, comprising a computer program, the computer program, when executed by a processor, implementing the operations of the method according to any one of claims 1 to 12 or the operations of the method according to any one of claims 13 to 16.

A3: Construct a fine-tuning training set

A4: Obtain K second prediction results by using a to-be-trained recognition model

A5: Train the to-be-trained model according to the K second prediction results and the fine-tuning training set, to obtain a local recognition model and a model adjustment parameter

A7: Update a model parameter of an image recognition model

A1: Capture K images

A2: First prediction results of the images

A6: Model adjustment parameter

Communication network
**130**

A1: Capture K images

A2: First prediction results of the images

A6: Model adjustment parameter

Server
**120**

Target terminal
**110**

⋮

Another terminal

Model adjustment parameter set of at least one terminal

FIG. 1

B3: If the category score included in the seventh prediction result is less than a category score threshold, send the to-be-recognized image

Communication network
**130**

B3: To-be-recognized image

B5: Image recognition result

B5: Image recognition result

Server
**120**

On-site terminal
**110**

B1: Recognize a captured to-be-recognized image by using a local recognition model, to obtain a seventh prediction result

B2: If a category score included in the seventh prediction result is greater than or equal to a category score threshold, determine that the to-be-recognized image belongs to a predicted category included in the seventh prediction result

B4: Recognize the to-be-recognized image by using an image recognition model, to obtain an image recognition result

FIG. 2

Photograph K images in a current on-site environment by using an image capture apparatus, K being an integer greater than or equal to 1 — S210

Transmit the K images to a server, so that the server obtains K first prediction results based on the K images by using an image recognition model — S220

Construct a fine-tuning training set according to the K images and the K first prediction results transmitted by the server, the fine-tuning training set including K groups of fine-tuning training data, and each group of fine-tuning training data including an image and a first prediction result of the image — S230

Fine-tune a to-be-trained model on an on-site terminal by using the fine-tuning training set, and in a process of fine-tuning the to-be-trained model on the on-site terminal, obtain, based on an image included in each group of fine-tuning training data in the fine-tuning training set and by using the to-be-trained model, K second prediction results corresponding to the images — S240

Update a model parameter of the to-be-trained model according to the second prediction result corresponding to each image and the first prediction result of the image in the fine-tuning training set, to obtain a local recognition model and a model adjustment parameter corresponding to the local recognition model — S250

Transmit the model adjustment parameter to a server if the local recognition model satisfies a model fine-tuning condition, so that the server updates a model parameter of an image recognition model according to a model adjustment parameter set from at least one terminal, the model adjustment parameter set including the model adjustment parameter — S260

FIG. 3

FIG. 4

On-site terminal        Terminal B        Terminal C

D1: Send a model adjustment parameter

D2: Send a model adjustment parameter

D3: Fine-tune according to the model adjustment parameter

D4: Fine-tune according to the model adjustment parameter

D5: Vote according to performance obtained after fine-tuning

D6: Vote according to performance obtained after fine-tuning

D7: Determine a voting score

D8: Determine a voting score

D9: Calculate a weighted voting score

D10: Calculate a weighted voting score

D11: Obtain a comprehensive recognition score

D12: Obtain a comprehensive recognition score

D13: Determine, according to the comprehensive recognition score, whether to accept a fine-tuning manner

D14: Determine, according to the comprehensive recognition score, whether to accept a fine-tuning manner

FIG. 5

Community A

Terminal A          Terminal B          Terminal C

Community B

Terminal D          Terminal E          Terminal F

## FIG. 6

Mall A

Mall A of city A

Terminal A          Terminal B          Terminal C

Mall A of city B

Terminal D          Terminal E          Terminal F

## FIG. 7

Terminal A     Access point     Terminal B

Terminal C

FIG. 8

```
                              ●

          ┌─────────────────────────────────────────────┐  E1
          │     Train and deploy a to-be-trained model    │
          └─────────────────────────────────────────────┘

          ┌─────────────────────────────────────────────┐  E2
          │       Obtain on-site environment information   │
          └─────────────────────────────────────────────┘

          ┌─────────────────────────────────────────────┐  E3
          │ Fine-tune the to-be-trained model to obtain a local recognition model │
          └─────────────────────────────────────────────┘

          ┌─────────────────────────────────────────────┐  E4
          │ Compare a prediction result of the local recognition model with a │
          │ prediction results of an image recognition model of a server end │
          └─────────────────────────────────────────────┘

          ┌─────────────────────────────────────────────┐  E5
          │ Synchronize the model adjustment parameter to T terminals in the │
          │                  same environment              │
          └─────────────────────────────────────────────┘

          ┌─────────────────────────────────────────────┐  E6
          │ The T terminals in the same environment separately fine-tune local to-be- │
          │ trained models by using the model adjustment parameter, to obtain │
          │                 recognition models             │
          └─────────────────────────────────────────────┘
```

Whether to accept fine-tuning — E7

E8 — Yes / No — E9

Report the model adjustment parameter

Keep an existing model unchanged

A server performs model training again based on the reported model adjustment parameter — E10

Monitor and evaluate a status of each terminal and model performance obtained after fine-tuning — E11

In a stable status or not — E12

E13 — Yes / No — E14

Perform a corresponding daily service

Continue to fine-tune the model

●

## FIG. 9

Receive K images transmitted by an on-site terminal, the K images being photographed by the on-site terminal in a current on-site environment by using a capture apparatus, and K being an integer greater than or equal to 1 — **S310**

Obtain K first prediction results based on the K images by using an image recognition model — **S320**

Transmit the K first prediction results to the on-site terminal, so that the on-site terminal constructs a fine-tuning training set according to the K images and the K first prediction results, fine-tunes a to-be-trained model on the on-site terminal by using the fine-tuning training set, and in a process of fine-tuning the to-be-trained model on the on-site terminal, obtains, based on an image included in each group of fine-tuning training data in the fine-tuning training set and by using the to-be-trained model, a second prediction result corresponding to each image, and updates a model parameter of the to-be-trained model according to the second prediction result corresponding to each image and the first prediction result of the image in the fine-tuning training set, to obtain a local recognition model and a model adjustment parameter corresponding to the local recognition model, the fine-tuning training set including K groups of fine-tuning training data, and each group of fine-tuning training data including an image and the first prediction result of the image — **S330**

Receive, if the local recognition model satisfies a model fine-tuning condition, the model adjustment parameter transmitted by the on-site terminal — **S340**

Update a model parameter of the image recognition model when obtaining a model adjustment parameter set from at least one terminal, the model adjustment parameter set including the model adjustment parameter — **S350**

FIG. 10

On-site terminal

Local recognition module — **F1**

Model fine-tuning

Send on-site environment information

Send a terminal status

Feed back a stable model status

**F2** — Automatic fine-tuning module based on on-site environment information

Multi-terminal status monitoring module — **F3**

Send a fine-tuning result

Feed back a fine-tuning result

Same-site multi-terminal model fine-tuning synchronization module — **F4**

Voting result

Send an optimized model adjustment parameter

On-site fine-tuning impact module — **F5**

Model optimization

Image recognition model — **F6**

Server

FIG. 11

FIG. 12

FIG. 13

60

Input device
610

Output device
620

Processor 630

650

Memory 640

FIG. 14

## INTERNATIONAL SEARCH REPORT

| International application No. |
| --- |
| **PCT/CN2024/096944** |

### A. CLASSIFICATION OF SUBJECT MATTER

G06V 10/774(2022.01)i; G06N 3/096(2023.01)i

According to International Patent Classification (IPC) or to both national classification and IPC

### B. FIELDS SEARCHED

Minimum documentation searched (classification system followed by classification symbols)

IPC: G06V, G06N

Documentation searched other than minimum documentation to the extent that such documents are included in the fields searched

Electronic data base consulted during the international search (name of data base and, where practicable, search terms used)

VEN, CNABS, CNTXT, ENTXTC, CNKI, IEEE, CJFD: 服务器, 终端, 边缘, 本地, 模型, 训练, 测试, 调整, 参数, 更新, 迭代, 循环, 云, 微调, 条件, server, terminal, edge, local, model, train+, test+, adjust+, parameter?, update, iterat+, loop, cloud, fine-tun+, condition

### C. DOCUMENTS CONSIDERED TO BE RELEVANT

| Category* | Citation of document, with indication, where appropriate, of the relevant passages | Relevant to claim No. |
| --- | --- | --- |
| PX | CN 116612358 A (TENCENT TECHNOLOGY (SHENZHEN) CO., LTD.) 18 August 2023 (2023-08-18)<br>claims 1-20, and description, paragraphs [0031]-[0229] | 1-21 |
| X | CN 114511897 A (TERMINUS GROUP CO., LTD.) 17 May 2022 (2022-05-17)<br>description, paragraphs [0054]-[0089] and [0100]-[0126], and figures 1-7 | 1-3, 11-14, 16-21 |
| X | CN 114463586 A (AGRICULTURAL BANK OF CHINA) 10 May 2022 (2022-05-10)<br>description, paragraphs [0005]-[0130], and figures 1-5 | 1-3, 11-14, 16-21 |
| A | US 2020258006 A1 (HUAWEI TECHNOLOGIES CO., LTD.) 13 August 2020 (2020-08-13)<br>entire document | 1-21 |
| A | WO 2020155939 A1 (GUANGZHOU SHIYUAN ELECTRONICS CO., LTD.) 06 August 2020 (2020-08-06)<br>entire document | 1-21 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 June 2024** | **16 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/CN2024/096944**</td></tr>
</table>

| Patent document cited in search report | | | Publication date (day/month/year) | Patent family member(s) | | | Publication date (day/month/year) |
|---|---|---|---|---|---|---|---|
| CN | 116612358 | A | 18 August 2023 | HK | 40091084 | A0 | 01 December 2023 |
| CN | 114511897 | A | 17 May 2022 | None | | | |
| CN | 114463586 | A | 10 May 2022 | None | | | |
| US | 2020258006 | A1 | 13 August 2020 | WO | 2019090954 | A1 | 16 May 2019 |
| | | | | EP | 3693912 | A4 | 12 August 2020 |
| | | | | CN | 109754105 | A | 14 May 2019 |
| | | | | CN | 111226238 | A | 02 June 2020 |
| WO | 2020155939 | A1 | 06 August 2020 | CN | 109766872 | A | 17 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310894889